(19) **Europäisches Patentamt / European Patent Office / Office européen des brevets**

(11) **EP 3 319 387 B1**

(12) # EUROPEAN PATENT SPECIFICATION

(45) Date of publication and mention of the grant of the patent:
**18.11.2020 Bulletin 2020/47**

(51) Int Cl.:
*H04L 5/00* *(2006.01)*       *H04W 72/04* *(2009.01)*
*H04W 16/14* *(2009.01)*      *H04W 74/08* *(2009.01)*

(21) Application number: **16817267.4**

(22) Date of filing: **30.06.2016**

(86) International application number:
**PCT/CN2016/087977**

(87) International publication number:
**WO 2017/000903 (05.01.2017 Gazette 2017/01)**

(54) **FREQUENCY SPECTRUM RESOURCE ALLOCATION METHOD AND APPARATUS**

VERFAHREN UND VORRICHTUNG ZUR ZUWEISUNG VON FREQUENZBEREICHSRESSOURCEN

PROCÉDÉ ET APPAREIL D'ATTRIBUTION DE RESSOURCE DE SPECTRE DE FRÉQUENCES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2015 CN 201510374253**

(43) Date of publication of application:
**09.05.2018 Bulletin 2018/19**

(73) Proprietor: **ZTE Corporation**
**Shenzhen, Guangdong 518057 (CN)**

(72) Inventors:
- **YANG, Ling**
  **Shenzhen**
  **Guangdong 518057 (CN)**
- **GOU, Wei**
  **Shenzhen**
  **Guangdong 518057 (CN)**
- **ZHAO, Yajun**
  **Shenzhen**
  **Guangdong 518057 (CN)**
- **PENG, Focai**
  **Shenzhen**
  **Guangdong 518057 (CN)**

(74) Representative: **Regimbeau**
**20, rue de Chazelles**
**75847 Paris Cedex 17 (FR)**

(56) References cited:
WO-A1-2011/006340      WO-A1-2014/161142
WO-A1-2016/056876      CN-A- 102 123 347
CN-A- 103 517 426       CN-A- 104 125 186
US-A1- 2012 307 771     US-A1- 2013 121 278

- ZTE: "Overview on LAA UL", 3GPP DRAFT; R1-152970 OVERVIEW ON LAA UL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Fukuoka, Japan; 20150525 - 20150529 24 May 2015 (2015-05-24), XP050972652, Retrieved from the Internet: URL:http://www.3gpp.org/ftp/Meetings_3GPP_SYNC/RAN1/Docs/ [retrieved on 2015-05-24]
- INSTITUTE FOR INFORMATION INDUSTRY (III): "UL Transmission for LAA", 3GPP DRAFT; R2-152343_UL TRANSMISSION FOR LAA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Fukuoka, Japan; 20150525 - 20150529 24 May 2015 (2015-05-24), XP050972036, Retrieved from the Internet: URL:http://www.3gpp.org/ftp/Meetings_3GPP_SYNC/RAN2/Docs/ [retrieved on 2015-05-24]

**Description**

**TECHNICAL FIELD**

The present invention relates to, but is not limited to, the technical field of communications and, in particular, relates to a spectrum resource allocation method and apparatus.

**BACKGROUND**

In the evolution of Long-Term Evolution (LTE) in Rel-13, one major subject matter is that the LTE system can work on an unlicensed carrier. This technology will enable the LTE system to use existing unlicensed carriers and greatly enhance potential spectrum resources for the LTE system so that the LTE system can achieve lower spectrum costs.

In addition, according to provisions on resource allocation in the existing 3rd Generation Partnership Project (3GPP) standard, the number of clusters allocated to a terminal is limited to two or less in a manner of inconsecutive resource allocation. To a certain extent, this not only affects the flexibility of scheduling, but also reduces gains brought by frequency diversity.

Further relevant technologies are also known from US 2013/121278 A1 (NOH MIN SEOK [KR] ET AL) 16 May 2013 (2013-05-16) which relates to a method and apparatus for allocating uplink resources in a wireless communication system, and US 2012/307771 A1 (YANG SUCKCHEL [KR] ET AL) 6 December 2012 (2012-12-06) which relates to a method and apparatus for transmitting an uplink signal in a wireless communication system. No effective technology has been provided to solve problems of poor flexibility, high overheads and low frequency diversity gains in resource allocation.

**SUMMARY**

The above problem is solved by a spectrum resource allocation method according to claim 1, 2 or 3, and a spectrum resource allocation apparatus according to claim 15. All embodiments and/or aspects not falling under the scope of the appended claims are to be considered merely as examples suitable for understanding the invention.

Also provided is a spectrum resource allocation method. The method includes: determining a resource allocation pattern of nodes according to a preset parameter, wherein the preset parameter includes at least one of: a starting position of a frequency domain or an offset of the frequency domain, an ending position of the frequency domain, a length of consecutively allocated resources or a size of consecutively allocated clusters, a number of clusters or a number of resource sets, a period $T$, a number of multiplexing nodes in frequency domain resources, and a number of allocatable resources in a system; and obtaining a corresponding resource allocation indicator value r by the resource allocation pattern determined by at least one of the preset parameters in a preset encoding mode, wherein the resource allocation indicator value r is used for indicating resource position information allocated to a terminal UE.

Alternatively, the number of the allocatable resources in the system is divided into a first number of interlace units, a first number of clusters, or a first number of resource blocks.

Alternatively, each of the interlace units or clusters or resource blocks includes a second number of resource units.

Alternatively, between the resource units in each of the interlace units or clusters or resource blocks have intervals of specific values; or between the resource units in each of the interlace units or clusters or resource blocks are consecutive resource blocks.

Alternatively, the intervals between the resource units are equal intervals or unequal intervals.

Alternatively, when the intervals between the resource units are equal, each of the intervals is the period T.

Alternatively, between the interlace units or between the clusters or between the resource blocks, between resource units of the same resource unit index have a specific offset.

Alternatively, the minimum of the offset is zero, the maximum of the offset is the first number or the second number or a preset number.

Alternatively, the period T is at least one of: 1, 2, 3, 4, 5, 6, 7, 8, 9 and 10.

A unit of the preset parameter T is resource block (RB) or resource element (RE) or resource block group (RBG) or sub-band.

Alternatively, the number of the allocatable resources in the system is at least one of: 100, 75, 50 and 25.

A unit of the allocatable resources in the system is RB.

Alternatively, the second number is obtained by dividing the number of the allocatable resources in the system by the period T.

Alternatively, the first number is the period T.

Alternatively, the resource units are resource blocks (RBs) or resource elements (REs) or resource block groups

(RBGs) or sub-bands.

Alternatively, the resource allocation pattern includes: a resource allocation pattern in which the minimum granularity of resource allocation is a resource block (RB), or a resource allocation pattern in which the minimum granularity of resource allocation is a resource element (RE). The minimum granularity of resource allocation is related to the granularity of a clear channel assessment (CCA) detection pattern.

Alternatively, the minimum granularity of resource allocation is consistent with the minimum granularity of the CCA detection pattern; or the minimum granularity of resource allocation granularity is inconsistent with the minimum granularity of the CCA detection pattern.

Alternatively, the resource allocation indicator value r is used for the terminal UE obtaining the allocated resource position information through corresponding decoding according to the resource allocation indicator value r, and the resource position information includes: the starting position of the frequency domain, and the length of the consecutively allocated resources; or the starting position of the frequency domain, and the size of the consecutively allocated clusters; or a starting position of the interlace units or clusters or resource blocks, and the number of consecutively allocated interlace units or clusters or resource blocks; or the starting position of the frequency domain, and the ending position of frequency domain resources; or a starting position of the interlace units or clusters or resource blocks, and an ending position of the interlace units or clusters or resource blocks.

Alternatively, the period T of the clusters, and/or the number of the multiplexing nodes, and/or the number of the clusters, and/or the first number, and/or the second number, and/or the intervals, and/or the offset, and/or the preset number in the resource allocation pattern are/is obtained by at least one of the following modes:

obtaining the period T of the clusters, and/or the number of the multiplexing nodes, and/or the number of the clusters, and/or the first number, and/or the second number, and/or the intervals, and/or the offset, and/or the preset number in the resource allocation pattern through a corresponding relationship with a system bandwidth;

obtaining the period T of the clusters, and/or the number of the multiplexing nodes, and/or the number of the clusters, and/or the first number, and/or the second number, and/or the intervals, and/or the offset, and/or the preset number in the resource allocation pattern through a downlink control information (DCI) indication;

obtaining the period T of the clusters, and/or the number of the multiplexing nodes, and/or the number of the clusters, and/or the first number, and/or the second number, and/or the intervals, and/or the offset, and/or the preset number in the resource allocation pattern through preset value(s); and

obtaining the period T of the clusters, and/or the number of the multiplexing nodes, and/or the number of the clusters, and/or the first number, and/or the second number, and/or the intervals, and/or the offset, and/or the preset number in the resource allocation pattern through value(s) configured by a base station or high layer signaling.

Alternatively, a way of determining the resource allocation indicator value r through the starting position of the frequency domain and the length of the consecutively allocated resources; or the starting position of the frequency domain and the size of the consecutively allocated clusters; or the starting position of the interlace units or clusters or resource blocks, the number of the consecutively allocated interlace units or clusters or resource blocks and the number of the allocatable resources, includes at least one of the following modes.

Mode 1:

In a case of the resource allocation pattern in which the minimum granularity of resource allocation is RB, when

$$(L_{CRBs} - 1) \le \left\lfloor N_{\mathrm{RB}}^{\mathrm{UL}} / 2 \right\rfloor, \text{ then } RIV = N_{\mathrm{RB}}^{\mathrm{UL}}(L_{CRBs} - 1) + RB_{\mathrm{START}}, \text{ and when } (L_{CRBs} - 1) > \left\lfloor N_{\mathrm{RB}}^{\mathrm{UL}} / 2 \right\rfloor, \text{ then}$$

$$RIV = N_{\mathrm{RB}}^{\mathrm{UL}}(N_{\mathrm{RB}}^{\mathrm{UL}} - L_{CRBs} + 1) + (N_{\mathrm{RB}}^{\mathrm{UL}} - 1 - RB_{\mathrm{START}}).$$

$L_{CRBs}$ denotes the length of the consecutively allocated resources or a number of interlace units or a number of clusters or a number of resource blocks when the minimum granularity of resource allocation is the RB. $N_{\mathrm{RB}}^{\mathrm{UL}}$ denotes the number of the allocatable resources when the minimum granularity of resource allocation is the RB.

$RB_{\mathrm{START}}$ denotes the starting position of the frequency domain or the starting position of the interlace units or the starting position of the clusters or the starting position of the resource blocks when the minimum granularity of resource allocation is the RB.

$RIV$ denotes the resource allocation indicator value r.

In a case of the resource allocation pattern in which the minimum granularity of resource allocation is RE, when $(L_{Carrier} - 1) \le \lfloor N_{Carrier} / 2 \rfloor$, then $C\_RIV = N_{Carrier}(L_{Carrier} - 1) + C_{\mathrm{START}}$, and when $(L_{Carrier} - 1) > \lfloor N_{Carrier} / 2 \rfloor$, then $C\_RIV = N_{Carrier}(N_{Carrier} - L_{Carrier} + 1) + (N_{Carrier} - 1 - C_{\mathrm{START}})$.

$N_{carrier}$ denotes the number of the allocatable resources when the minimum granularity of resource allocation is the RE.

$L_{Carrier}$ denotes the length of the consecutively allocated resources or the number of the interlace units or the number of the clusters or the number of the resource blocks when the minimum granularity of resource allocation is the RE.

$C_{START}$ denotes the starting position of the frequency domain or the starting position of the interlace units or the starting position of the clusters or the starting position of the resource blocks when the minimum granularity of resource allocation is the RE.

$C\_RIV$ denotes the resource allocation indicator value r.

Mode 2:

In the case of the resource allocation pattern in which the minimum granularity of resource allocation is RB or RE, $Y = Mod(x_1*c_1 + x_2*c_2, M)$.

$x_1$ denotes a starting resource index of a first resource set Cluster, or a starting position index of interlace units, or a starting position index of clusters or a starting position index of resource blocks.

$x_2$ denotes the length of consecutively allocated resources of the first resource set Cluster, or the number of the interlace units, or the number of the clusters, or the number of the resource blocks.

$$M = m_1 * m_2 .$$

$m_1, m_2$ are mutually prime that is configured by the system by a static or semi-static mode, that is to say, $m_1$, $m_2$ are mutually prime within the number of the available resources. $c_i = \dfrac{M}{m_i} * \left(\dfrac{M}{m_i}\right)'$ , $i = 1, 2$ and $\left(\dfrac{M}{m_i}\right)'$ is a smallest positive integer of satisfying $mod(c_i, m_i) = 1$.

Y denotes the resource allocation indicator value r.

Alternatively, the resource allocation indicator value r is determined by the ending position of frequency domain and one of the starting position of the frequency domain or the offset of the frequency domain; or is determined by the starting position of the interlace units or clusters or resource blocks, and the ending position of the interlace units or clusters or resource blocks, including: $r' = \sum\limits_{i=0}^{M'-1} \left\langle \dfrac{N' - s_i}{M' - i} \right\rangle$.

$s_i$ denotes an index of a starting RB or RE resource of frequency domain resources of a resource set Cluster allocated to a user, or the starting position index of the interlace units or clusters or resource blocks.

$s_i$ -1 denotes an index of an ending RB or RE resource of the frequency domain resources of the resource set Cluster allocated to the user, and $i = 0, 1$, or an ending position index of the interlace units or clusters or resource blocks.

M' denotes the number of the starting and ending of the resource set Cluster or the interlace units or clusters or resource blocks. For calculating the resource allocation indicator value r corresponding to the resource set Cluster, M' is 2.

$$N' = \left\lceil N_{RB}^{UL} / P \right\rceil + 1 .$$

P denotes a size of a resource block group (RBG), and P is configured according to a corresponding relationship with the system bandwidth or according to resource allocation requirements.

r' denotes the resource allocation indicator value r.

Alternatively, in the case of the resource allocation pattern in which the minimum granularity of resource allocation is the RB in the mode 1, when the *RIV* is received by the terminal UE, the terminal UE obtains the starting position $RB_{START}$ of frequency domain resources and the length $L_{CRBs}$ of the allocated consecutive resources, or the starting position $RB_{START}$ of the interlace units or clusters or resource blocks and the number $L_{CRBs}$ of the allocated consecutive interlace units or clusters or resource blocks in the resource allocation pattern, including:

calculating a value of $X = \left\lceil RIV / N_{RB}^{UL} \right\rceil + RIV \% N_{RB}^{UL}$; determining whether the value of X is less than $N_{RB}^{UL}$; when the value of X is less than $N_{RB}^{UL}$, then $RB_{start} = RIV \% N_{RB}^{UL}$ and $L_{CRBs} = \left\lceil RIV / N_{RB}^{UL} \right\rceil + 1$; $L_{CRBs}$

otherwise, $RB_{start} = N_{RB}^{UL} - RIV \% N_{RB}^{UL} - 1$ and $L_{CRBs} = N_{RB}^{UL} - \left\lceil RIV / N_{RB}^{UL} \right\rceil + 1$. $L_{CRBs}$

Alternatively, in the case of the resource allocation pattern in which the minimum granularity of resource allocation is the RE in the mode 1, after receiving the $C\_RIV$, the terminal UE obtains the starting position $C_{START}$ of the allocated subcarriers and the length $L_{Carrier}$ of allocated consecutive subcarriers in the frequency domain in a frequency spectrum, or the starting position $C_{START}$ of the interlace units or clusters or resource blocks and the number $L_{Carrier}$ of the allocated consecutive interlace units or clusters or resource blocks, including:
calculating $X=[C\_RIV/N_{Carrier}]+C\_RIV\%N_{Carrier}$; when $X<N_{Carrier}$, then $(L_{Carrier}-1)\leq \lfloor N_{Carrier}/2\rfloor$, obtaining $C_{START}=C\_RIV\%N_{Carrier}$ and $L_{Carrier}=[C\_RIV/N_{Carrier}]+1$; otherwise, when $X\geq N_{Carrier}$; then obtaining $C_{START}=N_{Carrier}-C\_RIV\%N_{Carrier}-1$ and $L_{Carrier}=N_{Carrier}-[C\_RIV/N_{Carrier}]+1$.

Alternatively, in the mode 2, after receiving the Y, the terminal UE obtains the starting position $r_1$ of the allocated resources and the length $r_2$ of the allocated consecutive resources in the frequency domain, or the starting position index $r_1$ of the interlace units or clusters or resource blocks, and the number $r_2$ of the allocated consecutive interlace units or clusters or resource blocks, including:

$$\mathrm{mod}\left(Y,m_1\right)=r_1'$$
$$\mathrm{mod}\left(Y,m_2\right)=r_2'$$

$r_1$ denotes the starting resource index of the allocated resource set Cluster1, or the starting position index of the interlace units or the starting position index of the clusters or the starting position index of the resource blocks. $r_2$ denotes the length of the resources of the allocated resources set Cluster1, or the number of the allocated consecutive interlace units or clusters or resource blocks.

Alternatively, after receiving the $r'$ sent by a base station, the UE obtains a starting position $s_i$ and an ending position $s_i$ -1 of each of the clusters or the first cluster, or obtains the starting position $s_i$ of the interlace units or clusters or resource blocks and the ending position $s_i$ -1 of the interlace units or clusters or resource blocks as follows.

In a case that a value of the number of $k$ combinations is $r'$, then for $\left\langle\begin{array}{c}n\\k\end{array}\right\rangle$, when $n=k-1,k,k+1,k+2,\cdots$, the value of $\left\langle\begin{array}{c}n\\k\end{array}\right\rangle$ is $y_1,y_2,y_3,y_4,y_5,\cdots$. According to the value $r'$ of the number of $k$ combinations, the first value less than $r'$, such as $y_4$, is selected. Then corresponding $n_k=k+2$, a value of the number of the remaining (k-1) combinations is $r'-y_4=r1'$ i.e., $\left\langle\begin{array}{c}n_{k-1}\\k-1\end{array}\right\rangle$. For $n_{k-1}=k-2,k-1,k,k+1,k+2,\cdots$, the value of $\left\langle\begin{array}{c}n_{k-1}\\k-1\end{array}\right\rangle$ is $y_1',y_2',y_3',y_4',y_5',\cdots$, and the first value less than $r1'$ is selected, and then $n_{k-1}=k$. In this way, the UE obtains $k$ resource position indexes allocated by the base station, wherein numbers involved in this case are positive integers.

Alternatively, the resource allocation indicator value r is used for, when the terminal UE receives the corresponding resource allocation indicator value r of the first cluster, or the first interlace unit or cluster or resource block, or multiple interlace units or clusters or resource blocks, or a set of interlace units or clusters or resource blocks, and receives the resource allocation indicator indicated via relatively low bit overheads, obtaining the resource allocation pattern in the entire available resources; or, obtaining the resource allocation pattern with equal interval in the entire available resources by the period T of the clusters and one of the number of the available resources or the number of the clusters.

Alternatively, a bitmap is used to indicate the resource allocation pattern in the entire available resources or the resource position information allocated to the terminal UE.

Also provided is a spectrum resource allocation apparatus. The apparatus includes a determining module and an obtaining module.

The determining module is configured to determine a resource allocation pattern of nodes according to a preset parameter, wherein the preset parameter includes at least one of:

a starting position of a frequency domain or an offset of the frequency domain, an ending position of the frequency domain, a length of consecutively allocated resources or a size of consecutively allocated clusters, a number of clusters or a number of resource sets, a period $T$, a number of multiplexing nodes in frequency domain resources, and a number of allocatable resources in a system.

The obtaining module is configured to obtain a corresponding resource allocation indicator value r by the resource allocation pattern determined by at least one of the preset parameters in a preset encoding mode. The resource allocation indicator value r is used for indicating resource position information allocated to a terminal UE.

Embodiments of the present invention further provide a computer-readable storage medium configured to store computer-executable instructions for executing, when executed by a processor, the above-mentioned method.

According to embodiments of the present invention, a resource allocation pattern of nodes is determined according to a preset parameter. The preset parameter includes at least one of: a starting position of a frequency domain or an offset of the frequency domain, an ending position of the frequency domain, a length of consecutively allocated resources or a size of consecutively allocated clusters, a number of clusters or a number of resource sets, a period $T$, a number of multiplexing nodes in frequency domain resources, and a number of allocatable resources in a system. A corresponding resource allocation indicator value r is obtained by the resource allocation pattern determined by at least one of the preset parameters in a preset encoding mode. Based on the resource allocation indicator value r, the position of the frequency domain corresponding to the first cluster allocated to the UE may be obtained, and then combining with the period T of the clusters, the number of multiplexing users or the number of the clusters, the resource pattern, allocated to the UE, on the available resources is determined. This solves problems of poor flexibility, high overheads and low frequency diversity gains in resource allocation caused by a limitation where at most two clusters can be allocated to each user. The method provided by embodiments of the present invention can be used to allocate multiple clusters (more than two clusters) to each UE flexibly, thereby increasing flexibility, reducing overheads and improving frequency diversity gains in resource allocation.

Other aspects can be understood after the accompanying drawings and detailed description are read and understood.

BRIEF DESCRIPTION OF DRAWINGS

FIG. 1 is a flowchart of a spectrum resource allocation method according to an embodiment of the present invention.

FIG. 2 is a block diagram of a spectrum resource allocation apparatus according to an embodiment of the present invention.

FIG. 3 is a schematic diagram one of resource allocation according to an embodiment of the present invention.

FIG. 4 is a schematic diagram two of resource allocation according to an embodiment of the present invention.

FIG. 5 is a schematic diagram three of resource allocation according to an embodiment of the present invention.

FIG. 6 is a schematic diagram four of resource allocation according to an embodiment of the present invention.

FIG. 7 is a schematic diagram five of resource allocation according to an embodiment of the present invention.

FIG. 8 is a schematic diagram six of resource allocation according to an embodiment of the present invention.

FIG. 9 is a schematic diagram seven of resource allocation according to an embodiment of the present invention.

FIG. 10 is a schematic diagram eight of resource allocation according to an embodiment of the present invention.

FIG. 11 is a schematic diagram nine of resource allocation according to an embodiment of the present invention.

FIG. 12 is a schematic diagram ten of resource allocation according to an embodiment of the present invention.

DETAILED DESCRIPTION

The present invention will be described hereinafter in detail with reference to the accompanying drawings in connection with the embodiments.

It is to be illustrated that the terms "first", "second" and the like in the description, claims and drawings of the present invention are used to distinguish between similar objects and are not necessarily used to describe a particular order or sequence.

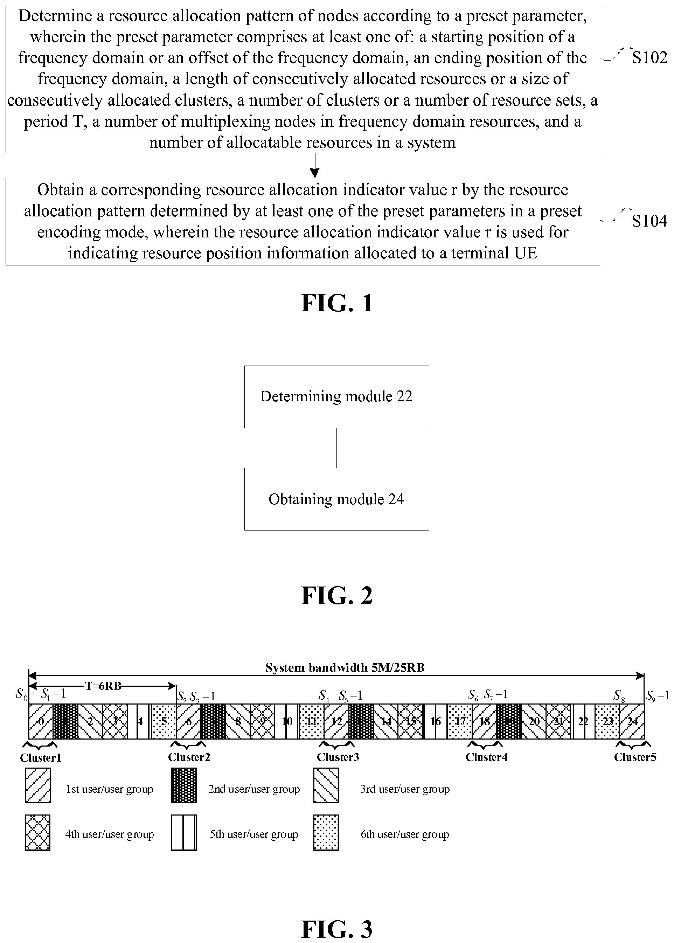

A spectrum resource allocation method is provided in an embodiment. FIG. 1 is a flowchart of a spectrum resource allocation method according to an embodiment of the present invention. As illustrated in FIG. 1, the method includes steps described below.

In step S102, a resource allocation pattern of nodes is determined according to a preset parameter, where the preset parameter includes at least one of: a starting position of a frequency domain or an offset of the frequency domain, an ending position of the frequency domain, a length of consecutive allocated resources or a size of clusters, the number of clusters or the number of resource sets, a period T, the number of multiplexing nodes in frequency domain resources, and the number of allocatable resources in the system;

In step S104, a corresponding resource allocation indicator value r is obtained by the resource allocation pattern determined by at least one of the above preset parameters in a preset encoding mode. The resource allocation indicator value r is used for indicating resource position information allocated to a terminal UE.

Through the steps described above, a resource allocation pattern of nodes is determined according to the above preset parameter(s). The preset parameter includes at least one of: the starting position of the frequency domain or the offset of the frequency domain, the ending position of the frequency domain, the length of consecutive allocated resources or the size of clusters, the number of clusters or the number of resource sets, the period T, the number of multiplexing nodes in the frequency domain resources, and the number of the allocatable resources in the system. The corresponding resource allocation indicator value r is obtained by the resource allocation pattern determined by at least one of the above preset parameters in the preset encoding mode. The resource allocation indicator value r can obtain the position of the frequency domain corresponding to the first cluster allocated to the UE, and further determine the resource allocation pattern, that is in the available resources and allocated to the UE, according to the period T of each of the clusters, the number of multiplexing users or the number of the clusters. This solves problems of poor flexibility, high overheads and low frequency diversity gains in resource allocation caused by a limitation where at most two clusters can be allocated to each user. The method provided by the present embodiment can be used to allocate multiple clusters (more than two clusters) to each UE flexibly, thereby increasing flexibility, reducing overheads and improving frequency diversity gains in resource allocation.

In the present embodiment, the resource allocation pattern includes: a resource allocation pattern that the minimum granularity of resource allocation is a resource block (RB), or a resource allocation pattern that the minimum granularity of resource allocation is a resource element (RE).

The minimum granularity of resource allocation is related to the granularity of a clear channel assessment (CCA) detection pattern.

In the present embodiment, the minimum granularity of resource allocation is consistent or inconsistent with the minimum granularity of the CCA detection pattern.

In the present embodiment, the resource allocation indicator value r is used for the terminal UE obtaining the allocated resource position information through corresponding decoding according to the resource allocation indicator value r. The resource position information includes: the starting position of the frequency domain, and the length of the consecutive allocated resources or the size of the clusters; or the starting position of the frequency domain, and the ending position of frequency domain resources.

In the present embodiment, the period T of the clusters, and/or the number of the multiplexing nodes, and/or the number of the clusters in the resource allocation pattern are/is obtained in at least one of the following modes:

obtaining the period T of the clusters, or the number of the multiplexing nodes, or the number of the clusters in the resource allocation pattern through a corresponding relationship with a system bandwidth;
obtaining the period T of the clusters, or the number of the multiplexing nodes, or the number of the clusters in the resource allocation pattern through a downlink control information (DCI) indication;
obtaining the period T of the clusters, or the number of the multiplexing nodes, or the number of the clusters in the resource allocation pattern through pre-setting; and
setting the period T of the clusters, or the number of the multiplexing nodes, or the number of the clusters in the resource allocation pattern as a value which can be configured directly through a base station or high level signaling.

In the present embodiment, the way of determining the resource allocation indicator value r through the starting position of the frequency domain or the offset of the frequency domain, the length of the consecutive allocated resources or the size of the clusters, and the number of the allocatable resources, includes one of the following modes.

Mode 1: In a case of the resource allocation pattern in which the minimum granularity of the resource allocation is the RB:

when $(L_{CRBs} - 1) \le \left\lfloor N_{RB}^{UL} / 2 \right\rfloor$, then $RIV = N_{RB}^{UL}(L_{CRBs} - 1) + RB_{START}$,

while, when $(L_{CRBs} - 1) > \left\lfloor N_{RB}^{UL} / 2 \right\rfloor$, then

$$RIV = N_{RB}^{UL}(N_{RB}^{UL} - L_{CRBs} + 1) + (N_{RB}^{UL} - 1 - RB_{START}).$$

where $L_{CRBs}$ denotes the length of the consecutive resources when the minimum granularity of resource allocation is the RB; $N_{RB}^{UL}$ denotes the number of the allocatable resources when the minimum granularity of resource allocation is the RB; $RB_{START}$ denotes the starting position of the frequency domain when the minimum granularity of resource allocation is the RB; $RIV$ denotes the resource allocation indicator value r.

In a case of the resource allocation pattern in which the minimum granularity of resource allocation is the RE:

when $(L_{Carrier}-1) \leq \lfloor N_{Carrier}/2 \rfloor$, then $C\_RIV=N_{Carrier}(L_{Carrier}-1)+C_{START}$,

while, when $(L_{Carrier}-1) > \lfloor N_{Carrier}/2 \rfloor$, then

$$C\_RIV = N_{Carrier}(N_{Carrier} - L_{Carrier} + 1) + (N_{Carrier} - 1 - C_{START}).$$

where $N_{Carrier}$ denotes the number of the allocatable resources when the minimum granularity of resource allocation is the RE; $L_{Carrier}$ denotes the length of the consecutive resources when the minimum granularity of resource allocation is the RE; $C_{START}$ denotes the starting position of the frequency domain when the minimum granularity of resource allocation is the RE; $C\_RIV$ denotes the resource allocation indicator value r.

Mode 2: In the case of the resource allocation pattern in which the minimum granularity of resource allocation is the RB or the RE:

$$Y = Mod\left(x_1 * c_1 + x_2 * c_2, M\right),$$

where $x_1$ denotes a starting resource index of the first resource set Cluster; $x_2$ denotes the length of consecutively allocated resources of the first resource set Cluster; $M = m_1 * m_2$; $m_1$, $m_2$ are mutually prime configured in a static mode or a semi-static mode by the system, i.e., $m_1, m_2$ are mutually prime within the number of the available resources; $c_i = \dfrac{M}{m_i} * \left(\dfrac{M}{m_i}\right)'$, $i$=1,2 and $\left(\dfrac{M}{m_i}\right)'$ is a smallest positive integer of satisfying mod($c_i, m_i$)=1; $\left(\dfrac{M}{m_i}\right)'$

is a conjugate transpose of $\left(\dfrac{M}{m_i}\right)$; $Y$ denotes the resource allocation indicator value r.

Mode 3: In the present embodiment, determining the resource allocation indicator value r by the starting position of the frequency domain or the offset of the frequency domain, and the ending position of the frequency domain includes:

$$r' = \sum_{i=0}^{M'-1} \left\langle \begin{matrix} N' - s_i \\ M' - i \end{matrix} \right\rangle,$$

where $\left\langle \begin{matrix} a \\ b \end{matrix} \right\rangle$ is a symbol of the number of combinations and represents $C_a^b$, i.e., the number of combinations formed by taking $b$ elements from $a$ different elements ($b \leq a$);

where $s_i$ denotes an index of the starting RB or RE resource of frequency domain resources of the resource set Cluster allocated to a user; $s_i$ -1 denotes an index of the ending RB or RE resource of frequency domain resources of the resource set Cluster allocated to the user, and $i$=0,1; $M'$ denotes the number of the starting and ending of the resource set Cluster; and for example, for calculating one resource allocation indicator value r corresponding to that resource set Cluster is calculated, $M'$ is 2;

$N' = \left\lceil N_{RB}^{UL} / P \right\rceil + 1$; $P$ denotes the size of a resource block group (RBG), and the size of $P$ is configured according to a corresponding relationship of $P$ and the system bandwidth or according to resource allocation requirements; $r'$ denotes the resource allocation indicator value r.

In the present embodiment, in the case of the resource allocation pattern in which the minimum granularity of resource allocation is the RB in the mode 1, after receiving the sent *RIV*, the terminal UE obtains the starting position $RB_{START}$ of frequency domain and the length $L_{CRBs}$ of the allocated consecutive resources in the resource allocation pattern, including:

calculating a value of $X = \left\lceil RIV / N_{RB}^{UL} \right\rceil + RIV \% N_{RB}^{UL}$ ;

judging whether the value of *X* is less than $N_{RB}^{UL}$ ;

if the value of *X* is less than $N_{RB}^{UL}$ , then $RB_{start} = RIV \% N_{RB}^{UL}$ and $L_{CRBs} = \left\lceil RIV / N_{RB}^{UL} \right\rceil + 1$ ;

otherwise, $RB_{start} = N_{RB}^{UL} - RIV \% N_{RB}^{UL} - 1$ and $L_{CRBs} = N_{RB}^{UL} - \left\lceil RIV / N_{RB}^{UL} \right\rceil + 1$ .

In the present embodiment, in the case of the resource allocation pattern in which the minimum granularity of resource allocation is the RE in the mode 1, after receiving the *C_RIV*, the terminal UE obtains the starting position $C_{START}$ of the allocated subcarriers and the length $L_{Carrier}$ of allocated consecutive subcarriers in the frequency domain in a frequency spectrum, including:

calculating a value of $X = [C\_RIV / N_{Carrier}] + C\_RIV \% N_{Carrier}$;
if $X < N_{Carrier}$, then $(L_{Carrier} - 1) \leq \lfloor N_{Carrier} / 2 \rfloor$,
i.e., $C_{START} = C\_RIV \% N_{Carrier}$ and $L_{Carrier} = [C\_RIV / N_{Carrier}] + 1$ can be obtained;
otherwise, if $X \geq N_{Carrier}$, then $C_{START} = N_{Carrier} - C\_RIV \% N_{Carrier} - 1$ and $L_{Carrier} = N_{Carrier} - [C\_RIV N_{Carrier}] + 1$.

In the present embodiment, in the mode 2, after receiving the value *Y*, the terminal UE obtains the starting position $r_1$ of the resources allocated to the UE and the length $r_2$ of the allocated consecutive resources in the frequency domain, including:

$$\mod(Y, m_1) = r_1$$

$$\mod(Y, m_2) = r_2$$

where $r_1$ denotes the starting resource index of the allocated resource set Cluster1; and $r_2$ denotes the length of the resources of the allocated resources set Cluster1.

Furthermore, after receiving the *r'* sent by a base station, the UE can obtain a starting position $s_i$ and an ending position $s_i - 1$ of each of the clusters or the first cluster, by the following way: if a value of the number of *k* combinations is *r'*, then for $\left( \begin{array}{c} n \\ k \end{array} \right)$, when $n = k-1, k, k+1, k+2, \cdots$, the value of $\left( \begin{array}{c} n \\ k \end{array} \right)$ is $y_1, y_2, y_3, y_4, y_5, \cdots$; according to the value *r'* of the number of combinations, the first value, such as $y_4$, less than *r'* is selected, then corresponding $n_k = k+2$, and a value of the number of the remaining (k-1) combinations is $r' - y_4 = r1'$, i.e., $\left( \begin{array}{c} n_{k-1} \\ k-1 \end{array} \right)$ ; for $n_{k-1} = k-2, k-1, k, k+1, k+2, \cdots$, the value of $\left( \begin{array}{c} n_{k-1} \\ k-1 \end{array} \right)$ is $y_1', y_2', y_3', y_4', y_5', \cdots$, and the first value, such as $y_3'$, less than *r1'* is selected, then $n_{k-1} = k$; in this way, the UE obtains *k* resource position indexes allocated by the base station to the UE, herein the above-mentioned numbers are all positive integers.

In the present embodiment, the resource allocation indicator value r corresponding to the first cluster can be calculated and then indicates the resource allocation by relatively low bit overheads; the resource allocation indicator value r is used for the terminal UE, after receiving the resource indicator r, obtains the resource allocation pattern with equal interval in the entire available resources according to the period T of each of the clusters and one of the number of the available resources or the number of the clusters.

The present embodiment further provides a spectrum resource allocation apparatus for implementing the above embodiments and alternative implementations. What has been described will not be repeated. As used below, the term "module" may be software, hardware or a combination thereof capable of implementing preset functions. The apparatus described in the following embodiment is preferably implemented by software, but implementation by hardware or by a combination of software and hardware is also possible and conceived.

FIG. 2 is a block diagram of a spectrum resource allocation apparatus according to an embodiment of the present invention. As illustrated in FIG. 2, the apparatus includes a determining module 22 and an obtaining module 24.

The determining module 22 is configured to determine a resource allocation pattern of nodes according to a preset parameter, wherein the preset parameter comprises at least one of:

a starting position of a frequency domain or an offset of the frequency domain, an ending position of the frequency domain, a length of consecutively allocated resources or a size of consecutively allocated clusters, a number of clusters or a number of resource sets, a period $T$, a number of multiplexing nodes in frequency domain resources, and a number of allocatable resources in a system.

The obtaining module 24 is configured to obtain a corresponding resource allocation indicator value r by the resource allocation pattern determined by at least one of the preset parameters in a preset encoding mode. The resource allocation indicator value r is used for indicating resource position information allocated to a terminal UE.

Through the apparatus described above, the resource allocation pattern of nodes is determined according to the preset parameter. The preset parameter includes at least one of the following: the starting position of the frequency domain or the offset of the frequency domain, the ending position of the frequency domain, the length of consecutively allocated resources or the size of consecutively allocated clusters, the number of clusters or the number of resource sets, the period $T$, the number of multiplexing nodes in the frequency domain resources, and the number of allocatable resources in the system. The corresponding resource allocation indicator value r is obtained by the resource allocation pattern determined by at least one of the preset parameters in the preset encoding mode. Though the resource allocation indicator value r a position of frequency domain corresponding to a first cluster allocated to a UE may be obtained, and then the resource allocation pattern, that is on the available resources and allocated to the UE, is determined according to the period T of the clusters, the number of multiplexing users or the number of the clusters. This solves problems of poor flexibility, high overheads and low frequency diversity gains in resource allocation caused by a limitation that at most two clusters can be allocated to each user. The method provided by the present embodiments can be used to allocate multiple clusters (more than two clusters) to each UE flexibly, thereby increasing flexibility, reducing overheads and improving frequency diversity gains in the resource allocation. The present invention will be described below in detail in conjunction with alternative embodiments.

The system bandwidth in the present invention may be at least one of the following: 5MHz, 10MHz, 15MHz, 20MHz and greater than 20 MHz. The number of the allocatable resources corresponding to the system bandwidth may be at least one of the following: greater than 100 RBs, 100 RBs, 75 RBs, 50 RBs and 25 RBs.

The number of the allocatable resources in the system is divided into a first number of interlace units or clusters or resource blocks according to the size of the interlace units or clusters or resource blocks. For example, if the system bandwidth is 20MHz and the number of the corresponding allocatable resources is 100 RBs, then, according to the size of 10 of the interlace units or clusters or resource blocks, the allocatable 100 RBs may be divided into 10 interlace units or clusters or resource blocks. That is, the allocatable 100 RBs are divided into: an interlace unit or cluster or resource block 0; an interlace unit or cluster or resource block 1; an interlace unit or cluster or resource block 2; an interlace unit or cluster or resource block 3; an interlace unit or cluster or resource block 4; an interlace unit or cluster or resource block 5; an interlace unit or cluster or resource block 6; an interlace unit or cluster or resource block 7; an interlace unit or cluster or resource block 8; and an interlace unit or cluster or resource block 9.

Each interlace unit or cluster or resource block includes a second number of resource units, and the second number is a value produced by dividing the number of the allocatable resources in the system by the period T or an interval and then rounded to an integer. For example, if the system bandwidth is 20MHz and the number of the corresponding allocatable resources is 100 RBs, then, according to the period T or the interval of 10, the allocatable 100 RBs may be divided into 10 interlace units or clusters or resource blocks, and each interlace unit or cluster or resource block includes 10 RB resource units. The resource units in each interlace unit or cluster or resource block may be physically consecutive or discrete with equal intervals or discrete with unequal intervals, or may be logically consecutive or discrete with equal intervals or discrete with unequal intervals.

The intervals between resource units may be the same number of intervals, or may be the different number of intervals. For example, when the intervals between the resource units in the interlace units or clusters or resource blocks are equal intervals, the interlace unit or cluster or resource block 0 may be {0, 10, 20, 30, 40, 50, 60, 70, 80, 90}; the interlace unit or cluster or resource block 1 may be {1, 11, 21, 31, 41, 51, 61, 71, 81, 91}; the interlace unit or cluster or resource block 2 may be {2, 12, 22, 32, 42, 52, 62, 72, 82, 92}; the interlace unit or cluster or resource block 3 may be {3, 13,23, 33, 43, 53, 63, 73, 83, 93}; the interlace unit or cluster or resource block 4 may be {4, 14, 24, 34, 44, 54, 64, 74, 84, 94}; the interlace unit or cluster or resource block 5 may be {5, 15, 25, 35, 45, 55, 65, 75, 85, 95}; the interlace unit or cluster or resource block 6 may be {6, 16, 26, 36, 46, 56, 66, 76, 86, 96}; the interlace unit or cluster or resource block 7 may be {7, 17, 27, 37, 47, 57, 67, 77, 87, 97}; the interlace unit or cluster or resource block 8 may be {8, 18, 28, 38, 48, 58, 68, 78, 88, 98}; and the interlace unit or cluster or resource block 9 may be {9, 19, 29, 39, 49, 59, 69, 79, 89, 99}.

Between the interlace units, between the clusters or between the resource blocks, between resource units with the same resource unit index have a specific offset. For example, in the above example, an offset of 1 exists between a resource unit with a resource unit index of 0 in the interlace unit or cluster or resource block 0 and a resource unit with a resource unit index of 0 in the interlace unit or cluster or resource block 1, and an offset of 1 also exists between a resource unit with a resource unit index of 1 in the interlace unit or cluster or resource block 0 and a resource unit with a resource unit index of 1 in the interlace unit or cluster or resource block 1.

Alternative embodiment one

With a view to improving flexibility, system performance and application scenarios in resource allocation, the present alternative embodiment provides a novel and improved resource allocation method. The method makes the number of multiplexing nodes in the available spectrum as large as possible, increases an appropriate number of clusters to bring about frequency diversity gains, and adopts corresponding parameters to reduce overheads and calculation complexity to a certain extent.

A problem to be solved by the present alternative embodiment, which provides a resource allocation method, is how to allow each of different UEs/UE groups to have its own resource allocation pattern so as to reduce overheads and complexity and bring about greater frequency diversity gains.

To solve the above problem, the resource allocation method provided by the present alternative embodiment is performed as follows.

A resource allocation pattern of nodes is determined according to at least one of the following parameters:

the starting position of frequency domain or the offset of frequency domain;

the ending position of frequency domain;

the length of consecutively allocated resources or the size of consecutively allocated clusters;

the number of clusters or the number of resource sets;

the period $T$;

the number of multiplexing nodes in frequency domain resources; and

the number of allocatable resources in the system.

A specific resource allocation pattern is determined based on one or more of the above parameters, and then a value is obtained in a specific encoding mode for indicating the resource allocation.

The resource allocation pattern includes: a resource allocation pattern that the minimum granularity of resource allocation is a resource block (RB), or a resource allocation pattern that the minimum granularity of resource allocation is a resource element (RE). The minimum granularity of the resource allocation (or the size of the clusters in the resource allocation) is related to the granularity of a clear channel assessment (CCA) detection pattern. Alternatively, the minimum granularity of the resource allocation may be consistent with the minimum granularity of the CCA detection pattern. Alternatively, the minimum granularity of the resource allocation may be inconsistent with the minimum granularity of the CCA detection pattern.

The resource allocation indicator value is obtained as follows: a base station encodes the parameter information of the resource pattern to be allocated to a UE to obtain the corresponding resource allocation indication value r.

The UE performs decoding with the received resource allocation indicator value r to obtain the starting position of frequency domain and the length of the consecutively allocated resources or the size of the clusters for the resources allocated to the UE its own, or to obtain the starting position of the frequency domain of the resources and the ending position of the frequency domain resources of one cluster.

The parameter of the period T or the number of the multiplexing nodes or the number of the clusters, which is used to determine the resource allocation pattern, may be predetermined, may be set as a configurable value, may be set a one-to-one corresponding relationship between a specific system bandwidth and one of the period of the clusters or the number of the multiplexing nodes or the number of the clusters, or may be notified through DCI.

The resource allocation indicator value r is determined by the parameters of the starting position of frequency domain or the offset of frequency domain, and the length of the consecutively allocated resources or the size of the clusters, and the number of the allocatable resources, or is determined by the starting position of the interlace units or clusters or resource blocks, and the number of consecutively allocated interlace units or clusters or resource blocks, and the number of the allocatable resources, in one of the following modes.

Mode 1:

In a case of the resource allocation pattern in which the minimum granularity of the resource allocation is the RB, the resource allocation indicator value r is calculated as follows:

$$\text{when } (L_{CRBs}-1) \le \left\lfloor N_{RB}^{UL}/2 \right\rfloor, \text{ then } RIV = N_{RB}^{UL}(L_{CRBs}-1) + RB_{START}; \text{ and}$$

$$\text{when } (L_{CRBs}-1) > \left\lfloor N_{RB}^{UL}/2 \right\rfloor, \text{ then } RIV = N_{RB}^{UL}(N_{RB}^{UL}-L_{CRBs}+1) + (N_{RB}^{UL}-1-RB_{START}).$$

$L_{CRBs}$ denotes the length of the consecutively allocated resources, or the number of the interlace units, or the number of the clusters, or the number of the resource blocks when the minimum granularity of the resource allocation is the RB. $N_{RB}^{UL}$ denotes the number of the allocatable resources when the minimum granularity of the resource allocation is the RB.

$RB_{START}$ denotes the starting position of the frequency domain, or the starting position of the interlace units, or the starting position of the clusters, or the starting position of the resource blocks when the minimum granularity of the resource allocation is the RB.

RIV (Resource Indicator Value) denotes the resource allocation indicator value r.

In a case of the resource allocation pattern in which the minimum granularity of resource allocation is the RE, the resource allocation indicator value r is:

$$\text{when } (L_{Carrier}-1) \le \lfloor N_{Carrier}/2 \rfloor, \text{ then } C\_RIV = N_{Carrier}(L_{Carrier}-1) + C_{START}; \text{ and}$$

$$\text{when } (L_{Carrier}-1) > \lfloor N_{Carrier}/2 \rfloor, \text{ then}$$

$$C\_RIV = N_{Carrier}(N_{Carrier} - L_{Carrier} + 1) + (N_{Carrier} - 1 - C_{START}).$$

$N_{carrier}$ denotes the number of the allocatable resources when the minimum granularity of the resource allocation is the RE.

$L_{Carrier}$ denotes the length of the consecutively allocated resources, or the number of the interlace units, or the number of the clusters, or the number of the resource blocks when the minimum granularity of resource allocation is the RE.

$C_{START}$ denotes the starting position of the frequency domain, or the starting position of the interlace units, or the starting position of the clusters, or the starting position of the resource blocks when the minimum granularity of the resource allocation is the RE.

C_RIV (Carrier Resource Indicator Value, i.e., SubCarrier-level Resource Indicator Value) denotes a RE-level resource allocation indicator value r.

In the mode 1, the resource allocation indicator value r is indicated to the terminal UE by a type0 mode of uplink resource allocation, and the UE receives the indicator value r sent from the base station by DCI signaling, and can obtain the starting position of the interlace units or the starting position of the clusters or the starting position of the resource blocks, and the number of the consecutively allocated interlace units or the number of the clusters or the number of the resource blocks. The UE can obtain the resource allocation pattern on the frequency domain resources through the starting position of the interlace units or the starting position of the clusters or the starting position of the resource blocks, and the number of the consecutively allocated interlace units or the number of the clusters or the number of the resource blocks. Herein, the starting position of the interlace units or the starting position of the clusters or the starting position of the resource blocks, and the number of the consecutively allocated interlace units or the number of the clusters or the number of the resource blocks, may mean one of: 1) the starting position of the interlace units and the number of the consecutively allocated interlace units, 2) the starting position of the clusters and the number of the consecutively allocated clusters, and 3) the starting position of the resource blocks and the number of the consecutively allocated resource blocks.

Mode 2:

In the case of the resource allocation pattern in which the minimum granularity of resource allocation is the RB or the RE, the resource allocation indicator value r is calculated as follows.

$$Y = Mod\left(x_1 * c_1 + x_2 * c_2, M\right).$$

$x_1$ denotes a starting resource index of the first Cluster (resource set), or a starting position index of the interlace units, or a starting position index of the clusters, or a starting position index of the resource blocks.

$x_2$ denotes the length of consecutively allocated resources of the first Cluster (resource set), or the number of the interlace units, or the number of the clusters, or the number of the resource blocks.

$Y$ denotes the resource allocation indicator value r.

$m_1, m_2$ are mutually prime that is configured by the system in a static mode or semi-static mode (which is notified to the UE through a high layer signaling or a UL grant), i.e., $m_1, m_2$ are mutually prime within the number of the available resources.

$$M = m_1 * m_2 ;$$

$c_i = \dfrac{M}{m_i} * \left(\dfrac{M}{m_i}\right)'$ , $i=1,2$ and $\left(\dfrac{M}{m_i}\right)'$ is a smallest positive integer of satisfying $\mod(c_i, m_i)=1$.

In the case of the resource allocation pattern in which the minimum granularity of the resource allocation is the RB in the mode 2, after receiving the RIV sent by the base station, the UE obtains the starting position $RB_{START}$ of the frequency domain and the length $L_{CRBs}$ of the allocated consecutive resources, or the starting position $RB_{START}$ of the interlace units or clusters or resource blocks and the number $L_{CRBs}$ of the allocated consecutive interlace units or clusters or resource blocks of the resource allocation pattern, which includes the following flow. Herein, the starting position $RB_{START}$ of the frequency domain and the length $L_{CRBs}$ of the allocated consecutive resources, or the starting position $RB_{START}$ of the interlace units or clusters or resource blocks, and the number $L_{CRBs}$ of the allocated consecutive interlace units or clusters or resource blocks of the resource allocation pattern, which may be obtained by the UE, may include one of: 1) the starting position $RB_{START}$ of the frequency domain and the length $L_{CRBs}$ of the allocated consecutive resources, 2) the starting position $RB_{START}$ of the interlace units and the number $L_{CRBs}$ of the allocated consecutive interlace units, 3) the starting position $RB_{START}$ of the clusters and the number $L_{CRBs}$ of the allocated consecutive clusters, and 4) the starting position $RB_{START}$ of the resource blocks and the number $L_{CRBs}$ of the allocated consecutive resource blocks.

A value of  $X = \left[ RIV / N_{RB}^{UL} \right] + RIV \% N_{RB}^{UL}$  is calculated.

Whether the value of $X$ is less than  $N_{RB}^{UL}$  is determined.

If the value of $X$ is less than  $N_{RB}^{UL}$  , then  $RB_{start} = RIV \% N_{RB}^{UL}$  and  $L_{CRBs} = \left[ RIV / N_{RB}^{UL} \right] + 1$ ;

Otherwise, $RB_{start} = N_{RB}^{UL} - RIV \% N_{RB}^{UL} - 1$  and  $L_{CRBs} = N_{RB}^{UL} - \left[ RIV / N_{RB}^{UL} \right] + 1$ . $L_{CRBs}$

Similarly, in the case of the resource allocation pattern in which the minimum granularity of resource allocation is the RE in the mode 2, after receiving the C_RIV sent by the base station, the terminal UE obtains the starting position $C_{START}$ of subcarriers and the length $L_{Carrier}$ of allocated consecutive subcarriers in a subcarrier-level resource allocation pattern, or the starting position $C_{START}$ of the interlace units or clusters or resource blocks and the number $L_{Carrier}$ of allocated consecutive interlace units or clusters or resource blocks, which includes the following flow.

$X=[C\_RIV/N_{Carrier}]+C\_RIV\%N_{carrier}$ is calculated.
if $X<N_{carrier}$, then $(L_{Carrier}-1)\leq\lfloor N_{Carrier}/2\rfloor$, i.e., $C_{START}=C\_RIV\%N_{carrier}$ and $L_{Carrier}=[C\_RIV/N_{Carrier}]+1$ may be acquired.

Otherwise, if $X\geq N_{Carrier}$, then $C_{START}=_{Carrier}-C\_RIV\%N_{Carrier}-1$ and $L_{Carrier}=N_{Carrier}-[C\_RIVIN_{Carrier}]+1$.

In the mode 2, after receiving the $Y$ sent by the base station, the UE obtains the starting position $r_1$ of allocated resources and the length $r_2$ of the allocated consecutive resources in the frequency domain, or the starting position index $r_1$ of the interlace units or clusters or resource blocks and the number $r_2$ of the allocated consecutive interlace units or clusters or resource blocks, which includes the following flow.

$$\mod\left(Y, m_1\right) = r_1$$

$$\mathrm{mod}\left(Y, m_2\right) = r_2 .$$

$r_1$ denotes the starting resource index of the allocated Cluster1, or the starting position index of the interlace units, or the starting position index of the clusters, or the starting position index of the resource blocks; and $r_2$ denotes the length of the resources of the allocated Cluster1, or the number of the allocated consecutive interlace units, or the number of the clusters, or the number of the resource blocks.

The resource indicator value r is determined by the parameters of the starting position of frequency domain or the offset of frequency domain, and the ending position of frequency domain; or the starting position of the interlace units or clusters or resource blocks, and the ending position of the interlace units or clusters or resource blocks by a following mode three:

$$r^{'} = \sum_{i=0}^{M^{'}-1} \left\langle \begin{matrix} N^{'} - s_i \\ M^{'} - i \end{matrix} \right\rangle .$$

$s_i$ denotes a starting RB or RE resource index of the frequency domain resources of the Cluster allocated to a user, or the starting position index of the interlace units or clusters or resource blocks.

$s_i$ -1 denotes an index of an ending RB or RE resource of the frequency domain resources of the Cluster allocated to the user, and $i$=0,1, or an ending position index of the interlace units or clusters or resource blocks.

$M'$ denotes the number of the starting and ending of the Cluster set, and here for just calculating the r corresponding to the one Cluster, $M'$ is 2.

$$N^{'} = \left\lceil N_{\mathrm{RB}}^{\mathrm{UL}} / P \right\rceil + 1 .$$

$P$ denotes a size of a resource block group (RBG). ($P$ may be configured according to a corresponding relationship between $P$ and bandwidths in LTE or may be configured flexibly according to resource allocation requirements.

$r'$ denotes the resource indicator value r.

In the mode 3, after receiving the value $r'$ sent by the base station, the UE may obtain a starting position $s_i$, and an ending position $s_i$-1 of each of the clusters or the first cluster, or may obtain the starting position $s_i$ of the interlace units or clusters or resource blocks and the ending position $s_i$-1 of the interlace units or clusters or resource blocks, by the following means: if a value of the number of $k$ combinations is $r'$, then for $\left\langle \begin{matrix} n \\ k \end{matrix} \right\rangle$ , when $n$=$k$-1,$k$,$k$+1,$k$+2,$\cdots$, the value of $\left\langle \begin{matrix} n \\ k \end{matrix} \right\rangle$ is $y_1, y_2, y_3, y_4, y_5, \cdots$; according to the value $r'$ of the number of combinations, the first value, such as $y_4$, less than $r'$ is selected, then corresponding $n_k$=$k$+2, and a value of the number of the remaining ($k$-1) combinations is $r'$-$y_4$=$r1'$, i.e., $\left\langle \begin{matrix} n_{k-1} \\ k-1 \end{matrix} \right\rangle$ ; for $n_{k-1}$=$k$-2,$k$-1,$k$,$k$+1,$k$+2,$\cdots$, the value of $\left\langle \begin{matrix} n_{k-1} \\ k-1 \end{matrix} \right\rangle$ is $y_1^{'}, y_2^{'}, y_3^{'}, y_4^{'}, y_5^{'}, \cdots$, and the first value, such as $y_3^{'}$, less than $r1'$ is selected, then $n_{k-1}$=$k$; in this way, the UE obtains $k$ resource position indexes allocated by the base station to the UE.

Through the above three modes, the resource indicator value may be obtained by calculating, in which the resource indicator value corresponds to the first cluster, or the first interlace unit or cluster or resource block, or multiple interlace units or clusters or resource blocks, or a set of the interlace units or clusters or resource blocks. Compared to calculation of the resource indicator values corresponding to multiple clusters (more than two clusters), the method of calculating the resource position indicator value that corresponds to one cluster, or corresponds to one interlace unit or cluster or resource block, or corresponds to multiple interlace units or clusters or resource blocks, or corresponds to a set of the interlace units or clusters or resource blocks, and/or introducing the parameter of the period or the number of the clusters or the number of the multiplexing nodes, can effectively save bit overheads, reduce calculation complexity and bring about greater frequency diversity gains. That is, after receiving the resource indicator value, the UE obtains the resource allocation pattern on the entire available resources or obtains the resource allocation pattern with equal intervals on the entire available resources according to the period T of each cluster appearing and the number of the available resources or the number of the clusters.

Here the period T, the number of the available resources and the number of the clusters may all be directly obtained through the corresponding relationship with the system bandwidths without extra bit overheads.

In the case where the number of clusters allocated to the user is greater than 2, as well as the intervals between the clusters are not the same or the sizes of the clusters are different, the number of bits required for the resource indicator information may be large and even go beyond the number of bits allocated for the resource indicator information in the existing standards. Hence, this problem may be solved through one of the modes described below.

In Mode one, a new DCI format is defined to satisfy the number of bits required for indicating corresponding to multiple clusters.

In Mode two, the number of bits used by some indicators for indicating irrelevant to the LTE-U system in the existing protocol is allocated to the user for performing the resource indicator information. For example, if an uplink does not need to perform power control and adjustment or send a DMRS (demodulation reference signal), 2 bits allocated to TPC in Format 4 and 3 bits of CS and OCC of DMRS, and so on, may serve as bits for indicating resource positions for multiple clusters.

With the above methods, one or more consecutive resource blocks or interlace units or clusters are allocated to each user. The consecutive resource blocks or interlace units or clusters may be physically or logically consecutive. Physically consecutive resource blocks may be construed to mean that the allocated resources are consecutive in the time or frequency dimension. Logically consecutive resource blocks may be construed to mean that the allocated resource blocks are virtual resource blocks and have consecutive resource block indexes. These virtual resource blocks and real physical resource blocks have a fixed mapping relation. Therefore, the real physical resource blocks can become consecutive through the specific mapping relation.

Additionally, in the above methods, the starting position of the frequency domain which is allocated to each user may start from the minimum resource position corresponding to the frequency domain resource index on the corresponding bandwidth (e.g., from index 0), or may start from a resource corresponding to a specific resource index in the middle of the frequency domain.

The present alternative embodiment provides a spectrum resource allocation method. The method may be used to flexibly obtain resource patterns with equal intervals or unequal intervals regarding to consecutive and inconsecutive RB-level resource allocation and subcarrier-level resource allocation. Moreover, due to adoption of the parameter of the period, the method further reduces system overheads, reduces calculation complexity and brings about greater frequency diversity gains.

The alternative embodiment of the present invention further provides a method for allocating frequency domain resources, such as RB or subcarrier resources, or resources in a pattern with discrete frequency domains and equal intervals, or resources in a pattern with discrete frequency domains and unequal intervals. Furthermore, the number of allocated discrete resources (the number of the clusters) is greater than 2. The alternative embodiment of the present invention focuses on resource allocation of RBs, and assumes some relatively reasonable parameters for specific description. However, the actual application is not limited to the allocation of RBs and the parameter values assumed in the embodiments, and may also involve allocation of subcarriers and assume other reasonable parameter values.

In the present invention, the number of the interlace units or clusters or resource blocks corresponds to the period T in the embodiments. The size of the interlace units or clusters or resource blocks is a value produced by dividing the number of RBs corresponding to the system bandwidth by the period T and then rounded to an integer, or is a value produced by dividing the number of RBs corresponding to the system bandwidth by the size of the interlace units or clusters or resource blocks and then rounded to an integer. The resource unit in the interlace unit or cluster or resource block corresponds to the cluster in the embodiment.

Alternative embodiment two

FIG. 3 is a schematic diagram one of resource allocation according to an alternative embodiment of the present invention. As illustrated in FIG. 3, in the resource allocation pattern, the system bandwidth is 5MHz = 25 RBs, and the period T of clusters corresponding to the system bandwidth of 5MHz is 6 RBs, or the number of the clusters is 5. It needs to be illustrated that the corresponding relationship between the system bandwidth and the period of the clusters or the number of the clusters may be specified in advance. In the alternative embodiment, the starting resource index of the frequency domain of the clusters is 0 by default, but is not limited to the default value, and may be a specific resource in the middle of the resources of the frequency domain.

In the present embodiment, the size of the interlace units or clusters or resource blocks is a value produced by dividing 25 RBs by the period of 6 RBs and then rounded to 4. The number of the interlace units or clusters or resource blocks is 6 RBs. The resource units in the interlace unit or cluster or resource block 0 are {cluster1 (corresponding to RB#0), cluster2 (corresponding to RB#6), cluster3 (corresponding to RB#12), cluster4 (corresponding to RB#18)}. The resource units in the interlace unit or cluster or resource block 1 are {cluster1 (corresponding to RB#1), cluster2 (corresponding to RB#7), cluster3 (corresponding to RB#13), cluster4 (corresponding to RB#19)}. The resource units in the interlace unit or cluster or resource block 2 are {cluster1 (corresponding to RB#2), cluster2 (corresponding to RB#8), cluster3 (corresponding to RB#14), cluster4 (corresponding to RB#20)}. The resource units in the interlace unit or cluster or resource block 3 are {cluster1 (corresponding to RB#3), cluster2 (corresponding to RB#9), cluster3 (corresponding to RB#15), cluster4 (corresponding to RB#21)}. The resource units in the interlace unit or cluster or resource block 4 are {cluster1 (corresponding to RB#4), cluster2 (corresponding to RB#10), cluster3 (corresponding to RB#16), cluster4 (corresponding to RB#22)}. The resource units in the interlace unit or cluster or resource block 5 are {cluster1 (corresponding to RB#5), cluster2 (corresponding to RB#11), cluster3 (corresponding to RB#17), cluster4 (corresponding to RB#23)}.

An indicator value r may be obtained through the starting position of the interlace units or clusters or resource blocks (i.e., the No. of the interlace unit or cluster or resource block as 0 or 1 or 2 or 3 or 4 or 5 described here), and the number of the consecutively allocated interlace units or clusters or resource blocks. The base station notifies the UE of the indicator value r. The UE may obtain the resource allocation pattern according to the starting position of the interlace units or clusters or resource blocks (i.e., the No. of the interlace unit or cluster or resource block as 0 or 1 or 2 or 3 or 4 or 5 described here) and the number of the consecutively allocated interlace units or clusters or resource blocks. Furthermore, the resource units in each of the interlace units or clusters or resource blocks may be predetermined by the base station or the UE, or may be notified by the base station to the UE through a physical layer DCI signaling, or may be notified to the UE through a RRC signaling.

The RB allocation is used as an example to describe the implementation of the resource allocation pattern in detail below. It is assumed that the frequency domain resources pattern allocated to a user 1 or a user group 1 is RB#0, RB#6, RB#12, RB#18 and RB#24, as illustrated in FIG. 3. To reduce resource indication overheads, the period T is adopted here. The resource allocation pattern on the entire frequency domain may be obtained by just acquiring the position of the first cluster and then in conjunction with the period T. Furthermore, the period T (or the number of the multiplexing users or the number of the clusters) and the system bandwidth are in a one-to-one corresponding relationship. The UE may obtain the period T according to the size of the system bandwidth. Here it is assumed that the 5 MHz bandwidth corresponds to a period T of 6.

For the UE side, after receiving the resource indicator value r corresponding to the first cluster sent by the base station, the UE by a corresponding decoding may obtain the staring position of the clusters in the frequency domain and the length of the allocated consecutive resources, or obtain the staring position and ending position of the clusters in the frequency domain.

The value of r may be obtained in mode 1 as follows:

$$\text{when } (L_{CRBs} - 1) \le \left\lfloor N_{RB}^{UL} / 2 \right\rfloor, \text{ then } RIV = N_{RB}^{UL}(L_{CRBs} - 1) + RB_{START} \text{; and}$$

$$\text{when } (L_{CRBs} - 1) > \left\lfloor N_{RB}^{UL} / 2 \right\rfloor, \text{ then } RIV = N_{RB}^{UL}(N_{RB}^{UL} - L_{CRBs} + 1) + (N_{RB}^{UL} - 1 - RB_{START}).$$

That is to say, when $L_{CRBs} = 1$, $N_{RB}^{UL} = 25$ and $RB_{START} = 0$, then $RIV = N_{RB}^{UL}(L_{CRBs} - 1) + RB_{START} = 0$. When receiving an RIV the value of which is 0, the UE may acquire that the resource position index of the first cluster is RB#0, and then, combining with the period T=6 implied by the system bandwidth, the UE may obtain the frequency domain resource pattern of: RB#0, RB#6, RB#12, RB#18 and RB#24.

The value of r may be obtained in mode 3 as follows:

$$r = \sum_{i=0}^{M'-1} \left\langle \begin{matrix} N' - s_i \\ M' - i \end{matrix} \right\rangle,$$

where, $N' = \left\lceil N_{RB}^{UL} / P \right\rceil + 1$, and N' and M' in the above equation may be different from or the same as N, M and P given in uplink resource allocation in the existing physical layer standard. Here, P is 2, $N' = \left\lceil N_{RB}^{UL} / P \right\rceil + 1 = \left\lceil 25/2 \right\rceil + 1 = 14$ and M'=2, then

$$r = \sum_{i=0}^{M'-1} \left\langle \begin{matrix} N' - s_i \\ M' - i \end{matrix} \right\rangle = \sum_{i=0}^{1} \left\langle \begin{matrix} 14 - s_i \\ 2 - i \end{matrix} \right\rangle = \left\langle \begin{matrix} 14 \\ 2 \end{matrix} \right\rangle + \left\langle \begin{matrix} 13 \\ 1 \end{matrix} \right\rangle = 104.$$

In this case, $\left\lceil \log_2 \left( \left( \begin{array}{c} \left\lceil N_{RB}^{UL} / P + 1 \right\rceil \\ M' \end{array} \right) \right) \right\rceil = \log_2 \left( \begin{array}{c} 14 \\ 2 \end{array} \right) = 7$ bits are required for transmitting the resource indicator value corresponding to the first cluster. $\left( \begin{array}{c} 14 \\ 2 \end{array} \right)$ represents a number of combinations $C_{14}^2$.

Furthermore, the resource position corresponding to the first cluster, which is obtained by decoding the value r, is the first RBG0. Here the first RB in each of the RBGs is allocated to that user or user group, and then combining with the acquired period T (a value of the period in units of RBs), the positions of the resource pattern allocated to the user or user group may be obtained and the positions are: the first RB resource in RBG#0, RBG#3, RBG#6, RBG#9 and RBG#12, so as to allocate to that user or user group. $\left\lceil \log_2 \left( \left( \begin{array}{c} \left\lceil N_{RB}^{UL} / P + 1 \right\rceil \\ M \end{array} \right) \right) \right\rceil = \log_2 \left( \begin{array}{c} 14 \\ 10 \end{array} \right) = 10$ bits are needed when resource allocation Type2 in the existing physical layer protocol is used to indicate resource position information of multiple clusters.

Therefore, it can be seen that, when the period T is adopted, bit overheads and calculation amount may further decrease.

The value r obtained in the mode 2 is $Y=Mod(x_1{}^*c_1+L_1{}^*c_2,M)$, where $m_1$=14, $m_2$=9 (where $m_1,m_2$ are two mutually primes within the number of the available resource configured by the system), $M=m_1{}^*m_2$=14*9=126, $c_1$=99, $c_2$=28, $x_1$=0, $L_1$=1. Then $Y=Mod(x_1{}^*c_1+L_1{}^*c_2,M)$=28. After the user or user group receives the value of Y, decoding is performed using the following equation:

$$\mod(Y, m_1) = \mod(28, 14) = 0 = r_1 .$$

$$\mod(Y, m_2) = \mod(28, 9) = 1 = r_2$$

$r_1$ indicates that the starting point of the allocated Cluster1 is 0. $r_2$ indicates that the length of the allocated Cluster1 is 1. Overheads for indicating one cluster are

$$\left\lceil \log_2 \left( \prod_{i=1}^{2P} m_i \right) \right\rceil = \left\lceil \log_2 \left( m_1 * m_2 \right) \right\rceil = \left\lceil \log_2 \left( 126 \right) \right\rceil = 7 \text{ bits.}$$

Furthermore, since the period of the clusters may be obtained according to the system bandwidth, the position information of multiple cluster sets allocated to the user or user group in the frequency domain may be obtained. If the period T is not adopted, the number of values of m may be required to be defined as 6 mutually primes (i.e., starting positions of 5 clusters correspond to five values of m, and one value of m is required if the lengths of all the clusters are same, so a total of 6 parameters m are required), then bit overheads for indicating the allocation pattern for the entire

frequency domain are $\left\lceil \log_2 \left( \prod_{i=1}^{2P} m_i \right) \right\rceil = \left\lceil \log_2 \left( m_1 * m_2 * m_3 * m_4 * m_5 * m_6 \right) \right\rceil$ bits. When the parameter of the period is adopted, system overheads decrease significantly.

In the present embodiment, relationships among the period T, the number of multiplexing users and the size of the clusters are that: the number of the multiplexing users may be uniquely determined according to the period T and the size of the clusters, or the period of the clusters of a user may be determined according to the product of the number of multiplexing users and the size of the clusters. That is, any two of the above three parameters may determine the third parameter. Through different combinations of these three parameters, it is possible to obtain various resource allocation patterns on the corresponding bandwidths. Furthermore, the number of the clusters may also be acquired based on the system bandwidth and the corresponding period (The premise is that, when the starting resource index of the clusters in the frequency domain is 0 and other allocated starting resource indexes are not 0, the number of the clusters allocated to a certain user or user group can also be obtained from the system bandwidth minus the resource index corresponding to the staring position of frequency domain and then divided by the period). Positions of the resource pattern may correspond one by one to positions of CCA Pattern frequency domain pattern adopted when the node for CCA detection performs the CCA detection, and whether the minimum granularity of resources in each cluster in resource allocation is RB or RE is determined according to the minimum granularity of resource detection in the CCA detection pattern.

The three modes for obtaining the resource indicator value corresponding to the first cluster according to the present embodiment can all be used. In the embodiments described below, one of the three modes may be just selected to describe different resource allocation patterns.

Alternative embodiment three

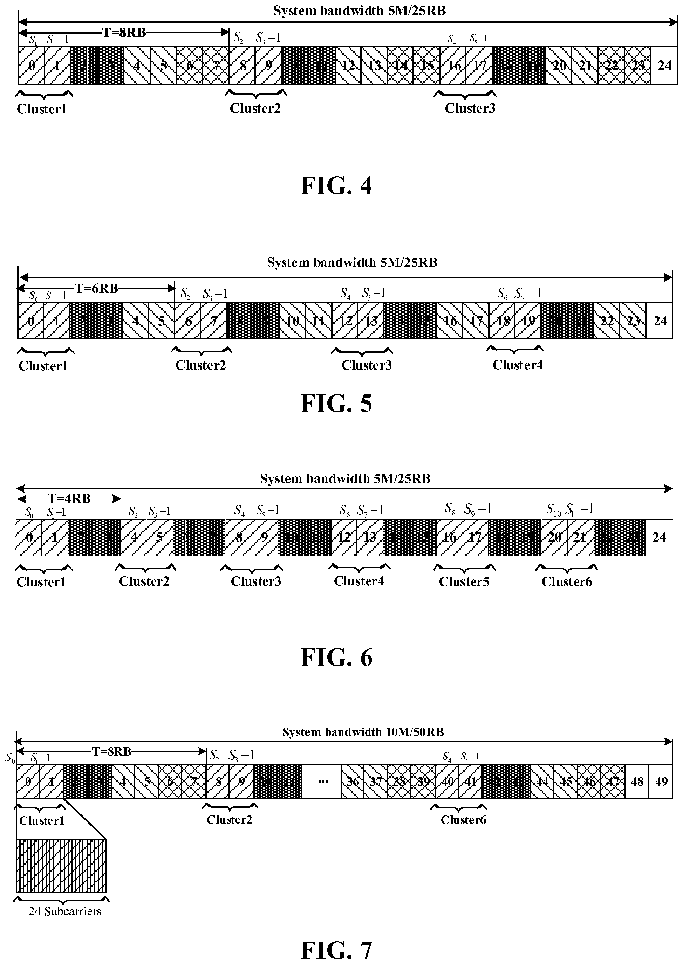

FIG. 4 is a schematic diagram two of resource allocation according to an alternative embodiment of the present invention. As illustrated in FIG. 4, in the resource allocation pattern, the system bandwidth is 5MHz=25 RBs, and the period T of clusters corresponding to the system bandwidth of 5MHz is 8 RBs, or the number of the clusters is 3. It needs to be illustrated that the corresponding relationship between the system bandwidth and the period of the clusters or the number of the clusters may be specified in advance. The size of each cluster is 2 RBs (i.e., the size of one RBG). In the embodiment, the starting resource index of the frequency domain of the clusters is 0 by default, but is not limited to the default value, and may be a specific resource in the middle of the resources of the frequency domain.

The RB allocation is used as an example to describe the implementation of the resource allocation pattern in detail below. It is assumed that the frequency domain resources pattern allocated to a user 1 or a user group 1 is RBG#0, RBG#4 and RBG#8, as illustrated in FIG. 4. To reduce resource indication overheads, the period T is adopted here. The resource allocation pattern on the entire frequency domain may be obtained by just acquiring the position of the first cluster and then in conjunction with the period T. Furthermore, the period T (or the number of the multiplexing users or the number of the clusters) and the system bandwidth are in a one-to-one corresponding relationship. The UE may obtain the period T according to the size of the system bandwidth. Here it is assumed that the 5 MHz bandwidth corresponds to a period T of 8.

For the UE side, after receiving the resource indicator value r corresponding to the first cluster sent by the base station, the UE by a corresponding decoding may obtain the staring position of the clusters in the frequency domain and the length of the allocated consecutive resources, or obtain the staring position and ending position of the clusters in the frequency domain.

The value of r may be obtained in mode 3 as follows:

$$r = \sum_{i=0}^{M'-1} \left\langle \begin{matrix} N' - s_i \\ M' - i \end{matrix} \right\rangle,$$

where, $N' = \left\lceil N_{RB}^{UL} / P \right\rceil + 1$, and $N'$ and $M'$ in the above equation may be different from or the same as N, M and P given in uplink resource allocation in the existing physical layer standard. Here, P is 2, $N' = \left\lceil N_{RB}^{UL} / P \right\rceil + 1 = \left\lceil 25/2 \right\rceil + 1 = 14$ and $M'$=2, then

$$r = \sum_{i=0}^{M'-1} \left\langle \begin{matrix} N' - s_i \\ M' - i \end{matrix} \right\rangle = \sum_{i=0}^{1} \left\langle \begin{matrix} 14 - s_i \\ 2 - i \end{matrix} \right\rangle = \left\langle \begin{matrix} 14 \\ 2 \end{matrix} \right\rangle + \left\langle \begin{matrix} 13 \\ 1 \end{matrix} \right\rangle = 104.$$

In this case, $\left\lceil \log_2 \left( \left( \begin{matrix} \left\lceil N_{RB}^{UL} / P + 1 \right\rceil \\ M' \end{matrix} \right) \right) \right\rceil = \log_2 \left( \begin{matrix} 14 \\ 2 \end{matrix} \right) = 7$ bits are required for transmitting the resource indicator value corresponding to the first cluster.

Furthermore, the value r is decoded as follows: for $\left\langle \begin{matrix} n \\ 2 \end{matrix} \right\rangle$, when n=1, 2, 3, 4, 5, ..., values of $\left\langle \begin{matrix} n \\ 2 \end{matrix} \right\rangle$ are 0, 1, 3, 6, 10, 15, 21, 28, 36, 45, 55, 66, 78, 91, 105 and 120. The first value less than 104 is selected to be 91, here the value of n is 14. The value of the number of remaining combinations is 104-91=13, i.e. $\left\langle \begin{array}{c} n_1 \\ 1 \end{array} \right\rangle$. When $n_1$ = 0, 1, 2, 3, ..., values

of $\left\langle \begin{array}{c} n_1 \\ 1 \end{array} \right\rangle$ are 0, 1, 2, 3, ..., 24, 25. The first value that is less than or equal to 13 is selected to be 13, where the value

of $n_1$ is 13. Therefore, the resource position of the first cluster may be obtained as RBG#0 according to the two of numbers of combinations 14 and 13, and the value of N'. In conjunction with the period T (the value of the period in units of RBs) obtained according to the system bandwidth, the positions of the resource pattern allocated to the user or user group may be obtained as RBG#0, RBG#4, and RBG#8. $\left\lceil \log_2\left( \left( \begin{array}{c} \left\lceil N_{RB}^{UL} / P + 1 \right\rceil \\ M \end{array} \right) \right) \right\rceil = \log_2\left( \begin{array}{c} 14 \\ 6 \end{array} \right) = 12$ bits are needed when resource allocation Type2 in the existing physical layer protocol is used to indicate resource position information of multiple clusters. Therefore, it can be seen that, when the period T is adopted, bit overheads and calculation amount may further decrease.

The value r obtained in the mode 2 is $Y=Mod(x_1{}^*c_1+L_1{}^*c_2,M)$, where $m_1$=14, $m_2$=9 (where $m_1,m_2$ are two mutually primes within the number of the available resource configured by the system), $M=m_1{}^*m_2$=14*9=126, $c_1$=99, $c_2$=28, $x_1$=0, $L_1$=2. Then $Y=Mod(x_1{}^*c_1+L_1{}^*c_2,M)$=56. After the user or user group receives the value of Y, decoding is performed using the following equation:

$$\mathrm{mod}\left(Y, m_1\right) = \mathrm{mod}\left(56, 14\right) = 0 = r_1$$

$$\mathrm{mod}\left(Y, m_2\right) = \mathrm{mod}\left(56, 9\right) = 2 = r_2$$

$r_1$ indicates that the starting point of the allocated Cluster1 is 0. $r_2$ indicates that the length of the allocated Cluster1 is 2 RBs. Overheads for indicating one cluster are

$$\left\lceil \log_2\left( \prod_{i=1}^{2P} m_i \right) \right\rceil = \left\lceil \log_2\left( m_1 {}^* m_2 \right) \right\rceil = \left\lceil \log_2\left( 126 \right) \right\rceil = 7 \text{ bits.}$$

Furthermore, since the period of the clusters may be obtained according to the system bandwidth, the position information of multiple cluster sets allocated to the user or user group in the frequency domain may be obtained. If the period T is not adopted, the number of values of m may be required to be defined as 4 mutually primes (i.e., starting positions of 3 clusters correspond to three values of m, and one value of m is required if the lengths of all the clusters are same, so a total of 4 parameters m are required), then bit overheads for indicating the allocation pattern for the entire frequency domain are

$$\left\lceil \log_2\left( \prod_{i=1}^{2P} m_i \right) \right\rceil = \left\lceil \log_2\left( m_1 {}^* m_2 {}^* m_3 {}^* m_4 \right) \right\rceil \text{bits.}$$

When the parameter of the period is adopted, system overheads decrease significantly. Furthermore, system overheads can be reduced to a certain extent when values m that are mutually prime are properly selected.

It is to be illustrated that, according to the multiplexing users, the size and the number of clusters allocated to each user, resources that remain on the corresponding system bandwidth and are not allocated to users may be allocated to the previous user adjacent to the remaining resources or allocated to the next user adjacent to a user corresponding to the remaining resources, or may make that resources vacant.

Alternative embodiment four

FIG. 5 is a schematic diagram three of resource allocation according to an alternative embodiment of the present invention. As illustrated in FIG. 5, in the resource allocation pattern, the system bandwidth is 5MHz=25 RBs, and the period T of clusters corresponding to the system bandwidth of 5MHz is 6 RBs, or the number of the clusters is 4. It needs to be illustrated that the corresponding relationship between the system bandwidth and the period of the clusters or the number of the clusters may be specified in advance. The size of each cluster is 2 RBs. In the embodiment, the starting resource index of the frequency domain of the clusters is 0 by default, but is not limited to the default value, and may be a specific resource in the middle of the resources of the frequency domain.

The RB allocation is used as an example to describe the implementation of the resource allocation pattern in detail below. It is assumed that the frequency domain resources pattern allocated to a user 1 or a user group 1 is RBG#0, RBG#3, RBG#6 and RBG#9, as illustrated in FIG. 5. To reduce resource indication overheads, the period T is adopted here. The resource allocation pattern on the entire frequency domain may be obtained by just acquiring the position of the first cluster and then in conjunction with the period T. Furthermore, the period T (or the number of the multiplexing users or the number of the clusters) and the system bandwidth are in a one-to-one corresponding relationship. The UE may obtain the period T according to the size of the system bandwidth. Here it is assumed that the 5 MHz bandwidth corresponds to a period T of 6 RBs.

For the UE side, after receiving the resource indicator value r corresponding to the first cluster sent by the base station, the UE by a corresponding decoding may obtain the staring position and ending position of the clusters in the frequency domain.

The value of the resource indicator value r may be obtained in mode 3 as follows:

$$r = \sum_{i=0}^{M'-1} \left\langle \begin{matrix} N' - s_i \\ M' - i \end{matrix} \right\rangle,$$

where, $N' = \left\lceil N_{RB}^{UL} / P \right\rceil + 1$, and $N'$ and $M'$ in the above equation may be different from or the same as N, M and P given in uplink resource allocation in the existing physical layer standard. Here, P is 2, $N' = \left\lceil N_{RB}^{UL} / P \right\rceil + 1 = \left[ 25/2 \right] + 1 = 14$ and $M' = 2$, then $r = \sum_{i=0}^{M'-1} \left\langle \begin{matrix} N' - s_i \\ M' - i \end{matrix} \right\rangle = \sum_{i=0}^{1} \left\langle \begin{matrix} 14 - s_i \\ 2 - i \end{matrix} \right\rangle = \left\langle \begin{matrix} 14 \\ 2 \end{matrix} \right\rangle + \left\langle \begin{matrix} 13 \\ 1 \end{matrix} \right\rangle = 104$. In this case, $\left\lceil \log_2 \left( \left( \begin{matrix} \left\lceil N_{RB}^{UL} / P + 1 \right\rceil \\ M' \end{matrix} \right) \right) \right\rceil = \log_2 \left( \begin{matrix} 14 \\ 2 \end{matrix} \right) = 7$ bits are required for transmitting the resource indicator value corresponding to the first cluster.

Furthermore, the value r is decoded as follows: for $\left\langle \begin{matrix} n \\ 2 \end{matrix} \right\rangle$, when n=1, 2, 3, 4, 5, ..., values of $\left\langle \begin{matrix} n \\ 2 \end{matrix} \right\rangle$ are 0, 1, 3, 6, 10, 15, 21, 28, 36, 45, 55, 66, 78, 91, 105 and 120. The first value less than 104 is selected to be 91, here the value of n is 14. The value of the number of remaining combinations is 104-91=13, i.e. $\left\langle \begin{matrix} n_1 \\ 1 \end{matrix} \right\rangle$. When $n_1$ = 0, 1, 2, 3, ..., values of $\left\langle \begin{matrix} n_1 \\ 1 \end{matrix} \right\rangle$ are 0, 1, 2, 3, ..., 24, 25. The first value that is less than or equal to 13 is selected to be 13, where the value of $n_1$ is 13. Therefore, the resource position of the first cluster may be obtained as RBG#0 according to the two of numbers of combinations 14 and 13 and the value of N. In conjunction with the period T (the value of the period in units of RBs) obtained by the system bandwidth, the positions of the resource pattern allocated to the user or user group may be obtained as RBG#0, RBG#3, RBG#6 and RBG#9.

While resource allocation Type2 in the existing physical layer protocol is used, it is needed to calculate the value r corresponding to the four clusters of RBG#0, RBG#3, RBG#6 and RBG#9, as follows in detail.

$$r = \sum_{i=0}^{M-1} \left\langle \begin{matrix} N - s_i \\ M - i \end{matrix} \right\rangle.$$

The starting resource index of the Cluster1 is $S_0$ = 0, the ending resource index of the Cluster1 is $S_1$ - 1 = 0,

and then $S_1$ = 1. The starting resource index of the Cluster2 is $S_2$ = 3, the ending resource index of the Cluster2 is $S_3$ - 1 = 3, and then $S_3$ = 4. The starting resource index of the Cluster3 is $S_4$ = 6, the ending resource index of the Cluster3 is $S_5$ - 1 = 6, and then $S_5$ = 7. The starting resource index of the Cluster4 is $S_6$ = 9, the ending resource index of the Cluster4 is $S_7$ - 1 = 9, and then $S_7$ = 10.

$$N = \lceil N_{\mathrm{RB}}^{\mathrm{UL}} / P \rceil + 1 = [25/2] + 1 = 14, \text{ and M=8.}$$

$$r = \sum_{i=0}^{M-1} \left\langle \begin{matrix} N - s_i \\ M - i \end{matrix} \right\rangle = \left\langle \begin{matrix} 14 \\ 8 \end{matrix} \right\rangle + \left\langle \begin{matrix} 13 \\ 7 \end{matrix} \right\rangle + \left\langle \begin{matrix} 11 \\ 6 \end{matrix} \right\rangle + \left\langle \begin{matrix} 10 \\ 5 \end{matrix} \right\rangle + \left\langle \begin{matrix} 8 \\ 4 \end{matrix} \right\rangle + \left\langle \begin{matrix} 7 \\ 3 \end{matrix} \right\rangle + \left\langle \begin{matrix} 5 \\ 2 \end{matrix} \right\rangle + \left\langle \begin{matrix} 4 \\ 1 \end{matrix} \right\rangle = 5552$$ is obtained by substituting the above parameters into r. It can be seen that calculation amount is large and calculation complexity is high when the value r is calculated in the related art. Furthermore, $\left\lceil \log_2 \left( \left( \begin{matrix} \lceil N_{RB}^{UL} / P + 1 \rceil \\ M \end{matrix} \right) \right) \right\rceil = \log_2 \left( \begin{matrix} 14 \\ 8 \end{matrix} \right) = 12$ bits are required for indicating the resource position information of the multiple clusters.

Five more bits are used for transmitting the resource indicator information as compared to the method of the present alternative embodiment in which the period T is adopted. it can be seen that bit overheads and calculation amount may further decrease when the period T is adopted.

Similarly, the above pattern may also be obtained using the mode 1 and the mode 2 in the present invention. Moreover, the period of the clusters or the number of multiplexing nodes or the number of the clusters are adopted, thus the same resource allocation pattern may be obtained by just calculating the resource indicator value corresponding to the first cluster and using less system overheads.

It is to be illustrated that, according to the multiplexing users, the size and the number of clusters allocated to each user, resources that remain on the corresponding system bandwidth and are not allocated to users may be allocated to the previous user adjacent to the remaining resources or allocated to the next user adjacent to a user corresponding to the remaining resources, or may make that resources vacant.

Alternative embodiment five

FIG. 6 is a schematic diagram four of resource allocation according to an alternative embodiment of the present invention. As illustrated in FIG. 6, in the resource allocation pattern, the system bandwidth is 5MHz = 25 RBs, and the period T of clusters corresponding to the 5MHz system bandwidth is 4 RBs, or the number of the clusters is 6. It needs to be illustrated that the corresponding relationship between the system bandwidth and the period of the clusters or the number of the clusters may be specified in advance. The size of each cluster is 2 RBs. In the embodiment, the starting resource index of the frequency domain of the clusters is 0 by default, but is not limited to the default value, and may be a specific resource in the middle of the resources of the frequency domain.

Similarly, the RB allocation is used as an example to describe the implementation of the resource allocation pattern in detail. It is assumed that the frequency domain resources pattern allocated to a user 1 or a user group 1 is RBG#0, RBG#2, RBG#4, RBG#6, RBG#8, and RBG#10, as illustrated in FIG. 6.

To reduce resource indication overheads, the period T is adopted here. The resource allocation pattern on the entire frequency domain may be obtained by just acquiring the position of the first cluster and then in conjunction with the period T. As in the alternative embodiment four, the value r corresponding to the first cluster is calculated to be 104, and the overheads are only 7 bits. While the equation in the existing standard is used,

$$\left\lceil \log_2 \left( \left( \begin{matrix} \lceil N_{RB}^{UL} / P + 1 \rceil \\ M \end{matrix} \right) \right) \right\rceil = \log_2 \left( \begin{matrix} 14 \\ 12 \end{matrix} \right) = 7$$ bits are required. From the perspective of bit overheads, in the case where the system bandwidth is 5MHz=25 RBs and the number of the clusters is 6, the bit overheads used for indicating these resource positions are equal. However, from the perspective of calculation complexity, the calculation using the equation in the existing standard is much more complex than the calculation using the equation provided by the present invention where the value r corresponding to one cluster is calculated and then the resource allocation pattern is obtained in conjunction with the period information.

It is to be illustrated that, according to the multiplexing users, the size and the number of clusters allocated to each user, resources that remain on the corresponding system bandwidth and are not allocated to users may be allocated to the previous user adjacent to the remaining resources or allocated to the next user adjacent to a user corresponding to the remaining resources, or may make that resources vacant.

Alternative embodiment six

FIG. 7 is a schematic diagram five of resource allocation according to an alternative embodiment of the present invention. As illustrated in FIG. 7, in the resource allocation pattern of the present alternative embodiment, the system bandwidth is 10MHz=50 RBs (or 600 subcarriers), and the period T of clusters corresponding to the 10MHz system bandwidth is 8 RBs (96 subcarriers), or the number of the clusters is 6. It needs to be illustrated that the corresponding relationship between the system bandwidth and the period of the clusters or the number of the clusters may be specified in advance. The size of each cluster is 3 RBs for the 10MHz bandwidth according to the existing standard. In the present embodiment, the size of the clusters is configured as 2 RBs or 24 subcarriers. Here a 1-bit indication message may be used to indicate that the size of the clusters is 2, or the corresponding relation between the system bandwidth and the period may be used to imply that the size of the clusters is 2. In the present embodiment, the starting resource index of the frequency domain of the clusters is 0 by default, but is not limited to the default value, and may be a specific resource in the middle of the resources of the frequency domain.

Similarly, the RB allocation is used as an example to describe the implementation of the resource allocation pattern in detail (the case of subcarriers may also be implemented using the modes described below). It is assumed that the frequency domain resources pattern allocated to a user 1 or a user group 1 is RBG#0, RBG#4, RBG#8, RBG#12, RBG#16, and RBG#20, as illustrated in FIG. 7.

The resource indicator value sent by the base station to the UE may be obtained in the following modes described below.

Mode 1:

when $(L_{CRBs} - 1) \leq \lfloor N_{RB}^{UL} / 2 \rfloor$, then $RIV = N_{RB}^{UL}(L_{CRBs} - 1) + RB_{START}$; and

when $(L_{CRBs} - 1) > \lfloor N_{RB}^{UL} / 2 \rfloor$, then $RIV = N_{RB}^{UL}(N_{RB}^{UL} - L_{CRBs} + 1) + (N_{RB}^{UL} - 1 - RB_{START})$.

That is, when $L_{CRBs}$ =2, $N_{RB}^{UL}$ =20 and $RB_{START}$ =0,, then $RIV = N_{RB}^{UL}(L_{CRBs} - 1) + RB_{START}$ =50*1+0=50. After the UE receives the RIV with a value of 50 and performs decoding, the decoding process is as follows.

$X = \lceil RIV / N_{RB}^{UL} \rceil + RIV \% N_{RB}^{UL} = 1$ is first calculated, and if X is less than $N_{RB}^{UL}$, then

$RB_{start}$ =$RIV \% N_{RB}^{UL} = 0$ and $L_{CRBs} = \lceil RIV / N_{RB}^{UL} \rceil + 1 = 2$. $L_{CRBs}$ It is obtained that the resource position index of the first cluster is RB#0 and RB1 (i.e., RBG#0), and then in conjunction with the period T=8 RBs (i.e., 4 RBGs, where the size of each RBG is 2) impliedly obtained according to the system bandwidth, the frequency domain resource pattern may be obtained to be RBG#0, RBG#4, RBG#8, RBG#12, RBG#16 and RBG#20 or RB#0, RB#1, RB#8, RB#9, RB#16, RB#17, RB#24, RB#25, RB#32, RB#33, RB#40 and RB#41. The number of bits required for transmitting the resource indication information is 6 bits, or 110010 indicated by a bitmap.

Adopting the mode 3, the resource indicator value of the first cluster is calculated using the equation $r = \sum_{i=0}^{M'-1} \left\langle \begin{matrix} N' - s_i \\ M' - i \end{matrix} \right\rangle$, where $s_0$ =0, $s_1$ -1 =0, i.e., $s_1$ =1, $M'$ =2, and $N' = \lceil N_{RB}^{UL} / P \rceil + 1 = [50/2] + 1 = 26$, then the value r corresponding to the cluster1 is 350, and the number of required bits is

$\left\lceil \log_2 \left( \begin{pmatrix} \lceil N_{RB}^{UL} / P + 1 \rceil \\ M \end{pmatrix} \right) \right\rceil = \log_2 \begin{pmatrix} 26 \\ 2 \end{pmatrix} = 9$. While the equation in the existing standard is used to calculate the resource indicator value corresponding to all cluster sets, $\left\lceil \log_2 \left( \begin{pmatrix} \lceil N_{RB}^{UL} / P + 1 \rceil \\ M \end{pmatrix} \right) \right\rceil = \log_2 \begin{pmatrix} 26 \\ 12 \end{pmatrix} = 24$ bits

are required. The bit overheads required for latter are about three times larger than the bit overheads required for the mode provided by the present invention, and thus can hardly meet the existing DCI format. If resources of multiple cluster are to be indicated, a new DCI format needs to be provided to meet the requirements of allocating multiple clusters to the UE.

Mode 2: The resource indicator value of the first cluster is calculated using the equation $Y=Mod(x_1*c_1+L_1*c_2,M)$, where m1=11, m2=3, M=33, c1=12, c2=22, x1=0, and x2=2, then Y=11. After the UE obtains the value of Y, the UE performs decoding, and the decoding process is as follows: $\begin{aligned}\mathrm{mod}(Y,m_1)=\mathrm{mod}(11,11)=0=r_1\\\mathrm{mod}(Y,m_2)=\mathrm{mod}(11,3)=2=r_2\end{aligned}$ . $r_1$ indicates that the starting point of the allocated Cluster1 is 0. $r_2$ indicates that the length of the allocated Cluster1 is 2.

$$\left\lceil \log_2\left(\prod_{i=1}^{2P} m_i\right)\right\rceil = \left\lceil \log_2\left(m_1 * m_2\right)\right\rceil = \left\lceil \log_2\left(33\right)\right\rceil = 6$$ bits are required. If the period is not adopted,

$$\left\lceil \log_2\left(\prod_{i=1}^{2P} m_i\right)\right\rceil = \left\lceil \log_2\left(m_1 * m_2 * m_3 * m_4 * m_5 * m_6 * m_7\right)\right\rceil$$ bits are required for depicting the entire resource allocation pattern. Apparently, more bits are required as compared to the mode where the period is adopted.

Therefore, it can be seen from the three modes, when resources of the multiple clusters are allocated to the user or user group, adopting the period reduces system overheads and calculation complexity significantly.

It is to be illustrated that, according to the multiplexing users, the size and the number of clusters allocated to each user, resources that remain on the corresponding system bandwidth and are not allocated to users may be allocated to the previous user adjacent to the remaining resources or allocated to the next user adjacent to a user corresponding to the remaining resources, or may make that resources vacant.

Alternative embodiment seven

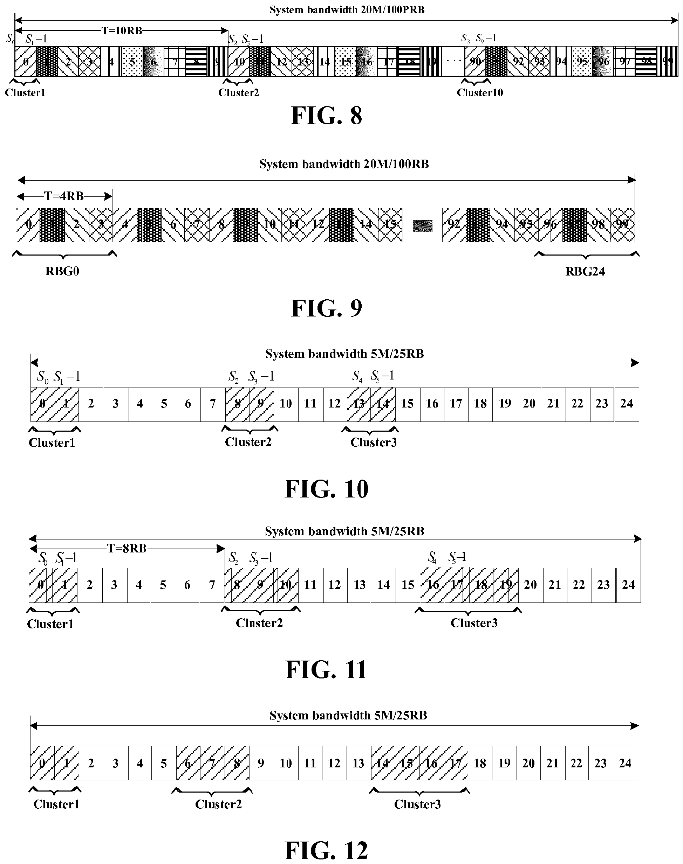

FIG. 8 is a schematic diagram six of resource allocation according to an alternative embodiment of the present invention. As illustrated in FIG. 8, in the resource allocation pattern of the present alternative embodiment, the system bandwidth is 20MHz=100 RBs, and the period T of clusters corresponding to the 20MHz system bandwidth is 10 RBs, or the number of the clusters is 10. It needs to be illustrated that the corresponding relationship between the system bandwidth and the period of the clusters or the number of the clusters may be specified in advance. The size of the cluster is 4 RBs for the 20MHz bandwidth according to the existing standard. In the present embodiment, the size of the clusters is configured as 1 RB. Here, the size of the clusters may be indicated to be 1 impliedly according to the corresponding relationship between the system bandwidth and the period or by adopting a 1-bit indication message. In the present embodiment, the starting resource index of the frequency domain of the clusters is 0 by default, but is not limited to the default value, and may be a specific resource in the middle of the resources of the frequency domain.

Similarly, the RB allocation is used as an example to describe the implementation of the resource allocation pattern in detail (the case of subcarriers may also be implemented by using the following means). It is assumed that the pattern of the frequency domain resources allocated to a user 1 or a user group 1 is RB#0, RB#10, RB#20, RB#30, RB#40, RB#50, RB#60, RB#70, RB#80 and RB#90, as illustrated in FIG. 8.

Specifically, in the present embodiment, the size of the interlace units or clusters or resource blocks is a value produced by dividing 100 RBs by the period of 10 RBs and then rounded to 10. The number of the interlace units or clusters or resource blocks is 10 RBs.

The resource units in the interlace unit or cluster or resource block 0 are {cluster1 (corresponding to RB#0), cluster2 (corresponding to RB#10), cluster3 (corresponding to RB#20), cluster4 (corresponding to RB#30), cluster5 (corresponding to RB#40), cluster6 (corresponding to RB#50), cluster7 (corresponding to RB#60), cluster8 (corresponding to RB#70), cluster9 (corresponding to RB#80) and cluster10 (corresponding to RB#90)}.

The resource units in the interlace unit or cluster or resource block 1 are {cluster1 (corresponding to RB#1), cluster2 (corresponding to RB#11), cluster3 (corresponding to RB#21), cluster4 (corresponding to RB#31), cluster5 (corresponding to RB#41), cluster6 (corresponding to RB#51), cluster7 (corresponding to RB#61), cluster8 (corresponding to RB#71), cluster9 (corresponding to RB#81) and cluster 10 (corresponding to RB#91)}.

The resource units in the interlace unit or cluster or resource block 2 are {cluster1 (corresponding to RB#2), cluster2 (corresponding to RB#12), cluster3 (corresponding to RB#22), cluster4 (corresponding to RB#32), cluster5 (corresponding to RB#42), cluster6 (corresponding to RB#52), cluster7 (corresponding to RB#62), cluster8 (corresponding to RB#72), cluster9 (corresponding to RB#82) and cluster 10 (corresponding to RB#92)}.

The resource units in the interlace unit or cluster or resource block 3 are {cluster1 (corresponding to RB#3), cluster2 (corresponding to RB#13), cluster3 (corresponding to RB#23), cluster4 (corresponding to RB#33), cluster5 (corresponding to RB#43), cluster6 (corresponding to RB#53), cluster7 (corresponding to RB#63), cluster8 (corresponding to RB#73), cluster9 (corresponding to RB#83) and cluster 10 (corresponding to RB#93)}.

The resource units in the interlace unit or cluster or resource block 4 are {cluster1 (corresponding to RB#4), cluster2 (corresponding to RB#14), cluster3 (corresponding to RB#24), cluster4 (corresponding to RB#34), cluster5 (corresponding to RB#44), cluster6 (corresponding to RB#54), cluster7 (corresponding to RB#64), cluster8 (corresponding to RB#74), cluster9 (corresponding to RB#84) and cluster10 (corresponding to RB#94)}.

The resource units in the interlace unit or cluster or resource block 5 are {cluster1 (corresponding to RB#5), cluster2 (corresponding to RB#15), cluster3 (corresponding to RB#25), cluster4 (corresponding to RB#35), cluster5 (corresponding to RB#45), cluster6 (corresponding to RB#55), cluster7 (corresponding to RB#65), cluster8 (corresponding to RB#75), cluster9 (corresponding to RB#85) and cluster10 (corresponding to RB#95)}.

The resource units in the interlace unit or cluster or resource block 6 are {cluster1 (corresponding to RB#6), cluster2 (corresponding to RB#16), cluster3 (corresponding to RB#26), cluster4 (corresponding to RB#36), cluster5 (corresponding to RB#46), cluster6 (corresponding to RB#56), cluster7 (corresponding to RB#66), cluster8 (corresponding to RB#76), cluster9 (corresponding to RB#86) and cluster10 (corresponding to RB#96)}.

The resource units in the interlace unit or cluster or resource block 7 are {cluster1 (corresponding to RB#7), cluster2 (corresponding to RB#17), cluster3 (corresponding to RB#27), cluster4 (corresponding to RB#37), cluster5 (corresponding to RB#47), cluster6 (corresponding to RB#57), cluster7 (corresponding to RB#67), cluster8 (corresponding to RB#77), cluster9 (corresponding to RB#87) and cluster10 (corresponding to RB#97)}.

The resource units in the interlace unit or cluster or resource block 8 are {cluster1 (corresponding to RB#8), cluster2 (corresponding to RB#18), cluster3 (corresponding to RB#28), cluster4 (corresponding to RB#38), cluster5 (corresponding to RB#48), cluster6 (corresponding to RB#58), cluster7 (corresponding to RB#68), cluster8 (corresponding to RB#78), cluster9 (corresponding to RB#88) and cluster10 (corresponding to RB#98)}.

The resource units in the interlace unit or cluster or resource block 9 are {cluster1 (corresponding to RB#9), cluster2 (corresponding to RB#19), cluster3 (corresponding to RB#29), cluster4 (corresponding to RB#39), cluster5 (corresponding to RB#49), cluster6 (corresponding to RB#59), cluster7 (corresponding to RB#69), cluster8 (corresponding to RB#79), cluster9 (corresponding to RB#89) and cluster10 (corresponding to RB#99)}.

The indicator value r may be obtained through the starting position (i.e., the serial number of the interlace unit or cluster or resource block as 0 or 1 or 2 or 3 or 4 or 5 or 6 or 7 or 8 or 9 or 10 described here) of the interlace units or clusters or resource blocks, and the number of the consecutively allocated interlace units or clusters or resource blocks. The base station notifies the UE of the indicator value r. The UE can obtain the resource allocation pattern based on the starting position (i.e., the serial number of the interlace unit or cluster or resource block as 0 or 1 or 2 or 3 or 4 or 5 or 6 or 7 or 8 or 9 or 10 described here) of the interlace units or clusters or resource blocks, and the number of the consecutively allocated interlace units or clusters or resource blocks. Furthermore, the resource units included in each interlace unit or cluster or resource block may be predetermined by the base station and the UE, or may be notified by the base station to the UE through physical-layer DCI signaling, or may be notified to the UE through RRC signaling. In the present embodiment, for the user 1 or the user group 1, the allocated resource pattern is determined and obtained according to the starting position with a value 0 of the interlace units or clusters or resource blocks and the number with a value 1 of the consecutively allocated interlace units or clusters or resource blocks, and the corresponding resource pattern allocated to the user 1 or the user group 1 is the resource units in the interlace unit or cluster or resource block 0, which are {cluster1 (corresponding to RB#0), cluster2 (corresponding to RB#10), cluster3 (corresponding to RB#20), cluster4 (corresponding to RB#30), cluster5 (corresponding to RB#40), cluster6 (corresponding to RB#50), cluster7 (corresponding to RB#60), cluster8 (corresponding to RB#70), cluster9 (corresponding to RB#80) and cluster10 (corresponding to RB#90)}, as illustrated in FIG. 8.

For the user 1 or the user group 1, if the allocated resource pattern is based on the starting position with a value 0 of the interlace units or clusters or resource blocks and the number with a value of 2 of the consecutively allocated interlace units or clusters or resource blocks, then the corresponding resource pattern, which is determined and obtained and is allocated to the user 1 or the user group 1, is the frequency domain resources corresponding to: the resource units in the interlace unit or cluster or resource block 0 which are {cluster1 (corresponding to RB#0), cluster2 (corresponding to RB#10), cluster3 (corresponding to RB#20), cluster4 (corresponding to RB#30), cluster5 (corresponding to RB#40), cluster6 (corresponding to RB#50), cluster7 (corresponding to RB#60), cluster8 (corresponding to RB#70), cluster9 (corresponding to RB#80) and cluster10 (corresponding to RB#90)}, and the resource units in the interlace unit or cluster or resource block 1 which are {cluster1 (corresponding to RB#1), cluster2 (corresponding to RB#11), cluster3 (corresponding to RB#21), cluster4 (corresponding to RB#31), cluster5 (corresponding to RB#41), cluster6 (corresponding to RB#51), cluster7 (corresponding to RB#61), cluster8 (corresponding to RB#71), cluster9 (corresponding to RB#81), cluster10 (corresponding to RB#91)}.

Similarly, the bitmap may also be used to indicate the resource allocation pattern of the user 1 or the user group 1. For example, there are 10 interlace units or clusters or resource blocks, and the bitmap 0101000000 is used to indicate that resource positions corresponding to the interlace unit or cluster or resource block 1 or 3 are allocated to the user 1 or the user group 1, i.e., {cluster1 (corresponding to RB#1), cluster2 (corresponding to RB#11), cluster3 (corresponding to RB#21), cluster4 (corresponding to RB#31), cluster5 (corresponding to RB#41), cluster6 (corresponding to RB#51), cluster7 (corresponding to RB#61), cluster8 (corresponding to RB#71), cluster9 (corresponding to RB#81) and cluster10 (corresponding to RB#91)}, and {cluster1 (corresponding to RB#3), cluster2 (corresponding to RB#13), cluster3 (corresponding to RB#23), cluster4 (corresponding to RB#33), cluster5 (corresponding to RB#43), cluster6 (corresponding to RB#53), cluster7 (corresponding to RB#63), cluster8 (corresponding to RB#73), cluster9 (corresponding to RB#83) and cluster10 (corresponding to RB#93)}. The advantage of using a bitmap is that both consecutive and discrete resource pattern can be flexibly indicated, while the disadvantage of using a bitmap is that bit overheads are high.

Just like the mode 2 in the alternative embodiment two, the value of Y is calculated as follows: $Y = Mod(x_1{}^*c_1 + L_1{}^*c_2, M)$, where $m_1 = 14$, $m_2 = 9$ (where $m_1$, $m_2$ are two mutually primes within the number of the available resource configured by the system), $M = m_1{}^*m_2 = 14{}^*9 = 126$, $c_1 = 99$, $c_2 = 28$, $x_1 = 0$, $L_1 = 1$. Then $Y = Mod(x_1{}^*c_1 + L_1{}^*c_2, M) = 28$. After the user or user group receives the value of Y, decoding is performed using the following equation:

$$\mod(Y, m_1) = \mod(28, 14) = 0 = r_1$$
$$\mod(Y, m_2) = \mod(28, 9) = 1 = r_2$$

$r_1$ indicates that the starting point of the allocated Cluster1 is 0. $r_2$ indicates that the length of the allocated Cluster1 is 1. Overheads for indicating one cluster are

$$\left\lceil \log_2\left(\prod_{i=1}^{2P} m_i\right) \right\rceil = \left\lceil \log_2(m_1 {}^* m_2) \right\rceil = \left\lceil \log_2(126) \right\rceil = 7 \text{ bits.}$$

Furthermore, it can be known, through the system bandwidth as 20MHz, that the corresponding period is 10. Based on decoding the resource position corresponding to the first cluster and the period 10, the entire resource pattern allocated to the user can be obtained as: RB#0, RB#10, RB#20, RB#30, RB#40, RB#50, RB#60, RB#70, RB#80 and RB#90. If the size of the clusters of the resource allocation set of other users is also 1 and the number of the clusters is also 10, then it can be known that 10 users can be multiplexed on the 20 MHz system bandwidth.

However, if the period T is not adopted, then 11 values of m (i.e., starting positions of 10 clusters correspond to 10 values of m, and one value of m is required if the lengths of all clusters are same, so a total of 11 parameters of m are required) that are mutually primes need to be defined, and then bit overheads for indicating the allocation pattern for the entire frequency domain are

$$\left\lceil \log_2\left(\prod_{i=1}^{2P} m_i\right) \right\rceil = \left\lceil \log_2(m_1 {}^* m_2 {}^* m_3 {}^* m_4 {}^* m_5 {}^* m_6 {}^* m_7 {}^* m_8 {}^* m_9 {}^* m_{10} {}^* m_{11}) \right\rceil \text{ bits.}$$

Apparently, when the period parameter is adopted, system overheads are decreased significantly.

Alternative embodiment eight

FIG. 9 is a schematic diagram seven of resource allocation according to an alternative embodiment of the present invention. As illustrated in FIG. 9, in the resource allocation pattern in the present alternative embodiment, the system bandwidth is 20MHz=100 RBs. According to the existing standard, the number of RBGs available for resource allocation is 25 and the size P of the RBGs is 4. Furthermore, based on the period T, as 4 RBs, of the clusters corresponding to the system bandwidth 20 MHz or the number, as 4, of the multiplexed users, the above resources are divided into 4 resource sets. The first resource set is composed of the first RBs of every RBGs, the second resource set is composed of the second RBs of every RBGs, the third resource set is composed of the third RBs of every RBGs, and the fourth resource set is composed of the fourth RBs of every RBGs. In this way, each resource set includes 25 RBs, and the resource indexes differ by 4 from each other.

In different CCA detection stages, resource allocation patterns are different, and the minimum granularity of resource allocation is consistent with the minimum granularity of a CCA detection pattern. It is assumed here that an equal-interval frequency domain pattern allocated to a certain user is as illustrated in FIG. 9: [RB1, RB5, RB9, RB13, RB17, RB21, RB25, RB29, RB33, RB37, RB41, RB45, RB49, RB53, RB57, RB61, RB65, RB69, RB73, RB77, RB81, RB85, RB89, RB93, RB97].

It can be seen from the allocated pattern that the pattern of the user is composed of RBs in the second resource set. Therefore, the base station only needs to indicate, by using $\left\lceil \log_2(C_4^1) \right\rceil = 2$ bits information, the UE which resource set the allocated resource are belonged, while does not need to indicate the indicator value corresponding to the resource pattern. This further save overheads.

For the case where the minimum granularity of resource allocation is a subcarrier, a mode same as the above mode can also be adopted.

The following alternative embodiments 9 to 11 will illustrate the process of obtaining a corresponding resource allocation pattern in detail, by way of example, for irregular resource allocation pattern of the frequency domain. Three cases are illustrated mainly: the size of the clusters is fixed while the period T of the clusters is variable; the size of the clusters is variable while the period T of the clusters is fixed; and both the size of the clusters and the period T of the clusters are variable. Here the minimum granularity of resource allocation is still the RB, but is not limited to the RB, and it may also be the granularity of resource allocation in RE level. It may be determined whether the minimum granularity of resource allocation is the RB or the RE according to the minimum granularity of the pattern used for processing the CCA detection when competing for an unlicensed carrier.

Alternative embodiment nine

FIG. 10 is a schematic diagram eight of resource allocation according to an alternative embodiment of the present invention. As illustrated in FIG. 10, the present alternative embodiment illustrates the schematic diagram of resource allocation, where, the bandwidth is 5 MHz (25 RBs), the size of the clusters is 2 RBs fixedly while intervals between the clusters are variable, and the number of the clusters is 3.

In the present embodiment, it is assumed that the system bandwidth is 5 MHz = 25 RBs, the minimum unit of resource allocation is the RB, and resources allocated to a certain user are [RB0, RB1], [RB8, RB9] and [RB13, RB14]. It can be seen from the allocated resources that the size of the three allocated clusters are the same, then, by adopting the remainder theorem method, values of m1, m2, m3 and m4 need to be defined, and m1=14, m2=9, m3=17 and m4=5. According to the starting resource index of the cluster1 being 0, the starting resource index of the cluster 2 being 8, the starting resource index of the cluster 3 being 13, and the sizes of all clusters being 2, $Y = \mathrm{mod}(x_1{}^*c_1 + x_2{}^*c_2 + x_3{}^*c_3 + L^*c_4, M)$ is obtained through joint coding, where C1=8415, C2=5950, C3=630, C4=6426, M=10710 and Y=4382. After the UE receives the value of Y, it is decoded using the following equation:

$$\mathrm{mod}\left(Y, m_1\right) = \mathrm{mod}\left(4382, 14\right) = 0 = r_1$$

$$\mathrm{mod}\left(Y, m_2\right) = \mathrm{mod}\left(4382, 9\right) = 8 = r_2 \quad .$$

$$\mathrm{mod}\left(Y, m_3\right) = \mathrm{mod}\left(4382, 17\right) = 13 = r_3$$

$$\mathrm{mod}\left(Y, m_4\right) = \mathrm{mod}\left(4382, 5\right) = 2 = r_4$$

$r_1$ indicates that the starting point of the allocated Cluster1 is 0, $r_2$ indicates that the starting point of the allocated Cluster2 is 8, $r_3$ indicates that the starting point of the allocated Cluster3 is 13, and $r_4$ indicates that the sizes of allocated clusters are 2.

The number of bits required by such resource allocation mode is

$$\left\lceil \log_2\left(\prod_{i=1}^{2P} m_i\right) \right\rceil = \left\lceil \log_2\left(m_1 {}^* m_2 {}^* m_3 {}^* m_4\right) \right\rceil = \left\lceil \log_2\left(10710\right) \right\rceil = 14 \text{ bits.}$$

However, in the existing standard, the calculation for allocation of discrete resources only allows the case where 2 cluster sets can be allocated to one certain user. Therefore, for the 5 MHz bandwidth, the number of bits required by allocating 2 cluster sets is $\left\lceil \log_2\left(\binom{\left\lceil N_{RB}^{UL} / P + 1\right\rceil}{M}\right) \right\rceil = \log_2\binom{14}{4} = 10 \text{ bits.}$ In the corresponding DCI format, only 10 bits are allocated to the resource allocation indicator for indicating the resource allocation. While the existing DCI format does not support the case with more than 2 clusters. Therefore, for LTE-U, bit positions used by some indicators for indicating irrelevant to the LTE-U system in the existing protocol may be allocated to the user. For example, if the uplink does not need to perform the power control and adjustment or send a DMRS, then 2 bits allocated to TPC in Format 4 and 3 bits of CS and OCC of DMRS, and so on, may serve as bits for indicating resource positions for multiple clusters. Alternatively, a new format may be defined for the case where multiple clusters exist and the sizes of the clusters or the intervals between the clusters are unequal.

Alternative embodiment ten

FIG. 11 is a schematic diagram nine of resource allocation according to an alternative embodiment of the present invention. As illustrated in FIG. 11, in the present alternative embodiment illustrates the schematic diagram of the resource allocation, where, the bandwidth is 5 MHz (25 RBs), the size of the clusters is variable while intervals between the clusters are fixed (i.e., the period is 8 RBs), and the number of the clusters is 3.

In the present embodiment, it is assumed that the system bandwidth is 5 MHz = 25 RBs, the minimum unit of resource allocation is the RB, and resources allocated to a certain user are [RB0, RB1], [RB8~RB10] and [RB16~RB19]. It can be seen from the allocated resources that the sizes of three allocated clusters are different but the period between each cluster is 8 RBs. The value of r obtained through means 3 is as follows:

$$r = \sum_{i=0}^{M'-1} \left\langle \begin{matrix} N' - s_i \\ M' - i \end{matrix} \right\rangle .$$

where, $N' = \left\lceil N_{\mathrm{RB}}^{\mathrm{UL}} / P \right\rceil + 1$, $N'$ and $N'$ and $M'$ in the above equation may be different from or the same as N, M and P given in uplink resource allocation in the existing physical layer standard. Here, P is 2, $N = \left\lceil N_{\mathrm{RB}}^{\mathrm{UL}} / P \right\rceil + 1 = \left[ 25/2 \right] + 1 = 14$ and $M=6$, then

$$r = \sum_{i=0}^{M-1} \left\langle \begin{matrix} N - s_i \\ M - i \end{matrix} \right\rangle = \sum_{i=0}^{5} \left\langle \begin{matrix} 14 - s_i \\ 6 - i \end{matrix} \right\rangle = \left\langle \begin{matrix} 14 \\ 6 \end{matrix} \right\rangle + \left\langle \begin{matrix} 13 \\ 5 \end{matrix} \right\rangle + \left\langle \begin{matrix} 10 \\ 4 \end{matrix} \right\rangle + \left\langle \begin{matrix} 8 \\ 3 \end{matrix} \right\rangle + \left\langle \begin{matrix} 6 \\ 2 \end{matrix} \right\rangle + \left\langle \begin{matrix} 4 \\ 1 \end{matrix} \right\rangle = 4575 .$$

In this case, $\left\lceil \log_2 \left( \left( \begin{matrix} \left\lceil N_{RB}^{UL} / P + 1 \right\rceil \\ \dot{M} \end{matrix} \right) \right) \right\rceil = \log_2 \left( \begin{matrix} 14 \\ 6 \end{matrix} \right) = 12 \, \mathrm{bits}$ are required for transmitting the resource indicator value.

For the case where the size of the clusters is less than an integral multiple of the size of the RBG, bits may be increased to indicate in which cluster the rear one or more RBs in the RBG corresponding to the ending position are vacant. Alternatively, the system bandwidth may also correspond to the clusters by defining the clusters of which the size is less than the integral multiple of the size of the RBG. For example, the 5MHz corresponds to three clusters, and the last RB in the RBG corresponding to the ending position index of the second cluster is vacant. The latter does not increase bit overheads.

While, if the remainder theorem method is adopted, values of m1, m2, m3, m4 and m5 need to be defined, and m1=13, m2=7, m3=19, m4=5 and m5=11. According to the starting resource index of the cluster 1 being 0, the size of the cluster 1 being 2, the size of the cluster 2 being 3, the size of the cluster 3 being 4, and the interval between the clusters being 8, $Y = \mathrm{mod}(x_1{}^*c_1 + x_2{}^*c_2 + x_3{}^*c_3 + x_4{}^*c_4 + T^*c_5, M)$ is obtained through the joint coding, where C1=21945, C2=40755, C3=60060, C4=76076, C5=86450, M=95095 and Y=21359. After the UE receives the value of Y, it is decoded using the following equation:

$$\mathrm{mod}\left(Y, m_1\right) = \mathrm{mod}\left(21359, 13\right) = 0 = r_1$$

$$\mathrm{mod}\left(Y, m_2\right) = \mathrm{mod}\left(21359, 7\right) = 2 = r_2$$

$$\mathrm{mod}\left(Y,m_3\right)=\mathrm{mod}\left(21359,19\right)=3=r_3 \;.$$

$$\mathrm{mod}\left(Y,m_4\right)=\mathrm{mod}\left(21359,5\right)=4=r_4$$

$$\mathrm{mod}\left(Y,m_5\right)=\mathrm{mod}\left(21359,11\right)=8=r_5$$

$r_1$ indicates that the starting point of the allocated Cluster1 is 0, $r_2$ indicates that the size of the allocated Cluster1 is 2, $r_3$ indicates that the size of the allocated Cluster2 is 3, and $r_4$ indicates that the size of the allocated Cluster2 is 4, and $r_5$ indicates that the interval between starting positions of the clusters is 8. The number of bits required by such resource allocation mode is $\left\lceil \log_2\left(\prod_{i=1}^{2P} m_i\right)\right\rceil = \left\lceil \log_2\left(m_1 * m_2 * m_3 * m_4 * m_5\right)\right\rceil = \left\lceil \log_2\left(95095\right)\right\rceil = 17\,\mathrm{bits}.$

The number of bits required for the above two resource allocation indication modes is several bits more than the number of bits required for the resource allocation indicator in the existing standard. Bit positions used by some indicators for indicating irrelevant to the LTE-U system in the existing protocol may be allocated to the user. For example, if the uplink does not need to perform the power control and adjustment or send the DMRS, then 2 bits allocated to TPC in Format 4 and 3 bits of CS and OCC of DMRS, and so on, may serve as bits for indicating resource positions for multiple clusters. Alternatively, a new format may be defined for the case where multiple clusters exist and the sizes of the clusters or the intervals between the clusters are unequal. Alternatively, for the remainder theorem mode, multiple values of m, that are mutually primes, may be appropriately selected furthermore.

Alternative embodiment eleven

FIG. 12 is a schematic diagram ten of resource allocation according to an alternative embodiment of the present invention. As illustrated in FIG. 12, in the present alternative embodiment illustrates the schematic diagram of the resource allocation, where, the system bandwidth is 5 MHz (25 RBs), the size of the clusters is variable while intervals between the clusters are variable as well, and the number of the clusters is 3.

In the present embodiment, it is assumed that the system bandwidth is 5 MHz = 25 RBs, the minimum unit of resource allocation is the RB, and resources allocated to a certain user are [RB0, RB1], [RB6~RB8] and [RB14~RB17]. It can be seen from the allocated resources that the sizes of three allocated clusters are different and the intervals between the clusters are variable as well. The value of r obtained through mode three is as follows:

$$r = \sum_{i=0}^{M'-1}\left\langle \begin{matrix} N' - s_i \\ M' - i \end{matrix}\right\rangle .$$

$N' = \left\lceil N_{\mathrm{RB}}^{\mathrm{UL}} / P \right\rceil + 1$, and $N'$ and $M'$ in the above equation may be different from or the same as N, M and P given in uplink resource allocation in the existing physical layer standard. Here, P is 2, $N = \left\lceil N_{\mathrm{RB}}^{\mathrm{UL}} / P \right\rceil + 1 = \left\lceil 25/2 \right\rceil + 1 = 14$ and M=6, then

$$r = \sum_{i=0}^{M-1}\left\langle \begin{matrix} N - s_i \\ M - i \end{matrix}\right\rangle = \sum_{i=0}^{5}\left\langle \begin{matrix} 14 - s_i \\ 6 - i \end{matrix}\right\rangle = \left\langle \begin{matrix} 14 \\ 6 \end{matrix}\right\rangle + \left\langle \begin{matrix} 13 \\ 5 \end{matrix}\right\rangle + \left\langle \begin{matrix} 11 \\ 4 \end{matrix}\right\rangle + \left\langle \begin{matrix} 9 \\ 3 \end{matrix}\right\rangle + \left\langle \begin{matrix} 7 \\ 2 \end{matrix}\right\rangle + \left\langle \begin{matrix} 5 \\ 1 \end{matrix}\right\rangle = 4730 .$$

In this case, $\left\lceil \log_2\left(\left(\begin{matrix}\left\lceil N_{RB}^{UL} / P + 1\right\rceil \\ M\end{matrix}\right)\right)\right\rceil = \log_2\left(\begin{matrix}14 \\ 6\end{matrix}\right) = 12\,\mathrm{bits}$ are required for transmitting the resource indicator value. Just like the alternative embodiments 10 and 11, in the case where the existing DCI format is insufficient for indicating the number of bits used by 3 clusters, a new format may be defined or bits occupied by relevant parameters which may be different for the LTE-U may be allocated to resource indication bits of multiple clusters.

Further, for the case where the size of the clusters is less than an integral multiple of the size of the RBG, bits may be increased to indicate in which cluster the rear one or more RBs in the RBG corresponding to the ending position are vacant. Alternatively, the system bandwidth may also correspond to the clusters by defining the clusters of which the size is less than the integral multiple of the size of the RBG. For example, the 5 MHz corresponds to three clusters, and the last RB in the RBG corresponding to the ending position index of the second cluster is vacant. The latter does not increase bit overheads.

Similarly, for the system bandwidth being 10MHz, 15MHz and 20MHz, it can be realized by adopting the above means.

From the description of the embodiments described above, it will be apparent to those skilled in the art that the method of any embodiment described above may be implemented by means of software plus necessary general-purpose hardware, or may of course be implemented by hardware, but in many cases the former is a preferred embodiment. Based on this understanding, the present invention may be embodied in the form of a software product. The software product is stored in a storage medium (such as a ROM/RAM, a magnetic disk or an optical disk) and includes several instructions for enabling a terminal device (which may be a mobile phone, a computer, a server or a network device) to execute the method according to each embodiment of the present invention.

Another embodiment of the present invention provides a storage medium. Alternatively, in the present embodiment, the storage medium may be configured to store program codes for executing the steps in the embodiments described above.

Alternatively, in the present embodiment, the storage medium may include, but not limited to, a U disk, a read-only memory (ROM), a random-access memory (RAM), a mobile hard disk, a magnetic disk, an optical disk or another medium capable of storing program codes.

It will be understood by those of ordinary skill in the art that all or part of the steps in the methods described above may be implemented by related hardware (e.g., a processor) instructed by one or more programs, and these programs may be stored in a computer-readable storage medium such as a ROM, a magnetic disk, an optical disk or the like. Alternatively, all or part of the steps in the embodiments described above may also be implemented using one or more integrated circuits. Accordingly, the modules/units in the embodiments described above may be implemented by hardware. For example, the functions of these modules/units may be implemented by one or more integrated circuits. Alternatively, these modules/units may be implemented by software function modules. For example, the functions of these modules/units may be implemented by using a processor to execute program instructions stored in a storage medium. The present application is not limited to any specific combination of hardware and software.

**INDUSTRIAL APPLICABILITY**

In the embodiments of the present invention, the spectrum resource allocation method includes determining a resource allocation pattern of nodes according to a preset parameter, wherein the preset parameter comprises at least one of: a starting position of a frequency domain or an offset of the frequency domain, an ending position of the frequency domain, a length of consecutively allocated resources or a size of consecutively allocated clusters, a number of clusters or a number of resource sets, a period $T$, a number of multiplexing nodes in frequency domain resources, and a number of allocatable resources in a system; and obtaining a corresponding resource allocation indicator value r by the resource allocation pattern determined by at least one of the preset parameters in a preset encoding mode. The resource allocation indicator value r is used for indicating resource position information allocated to a terminal UE. The solution solves problems of poor flexibility, high overheads and low frequency diversity gains in resource allocation caused by a limitation where at most two clusters may be allocated to each user. The method provided by embodiments of the present invention may be used to allocate multiple clusters (more than two clusters) to each UE flexibly, thereby increasing flexibility, reducing overheads and improving frequency diversity gains in resource allocation.

**Claims**

1. A spectrum resource allocation method comprising:

   determining (S102) a resource allocation pattern of user equipments, UEs, or UE groups according to preset parameters, wherein the preset parameters comprise: a starting position of a frequency domain or an ending position of the frequency domain, a length of consecutively allocated resources, and a number of allocatable resources in a system;
   wherein the allocatable resources in the system and the consecutively allocated resources are divided into interlace units and consecutively allocated interlace units respectively;
   obtaining (S104) a resource allocation indicator value, RIV, through a starting position of the interlace units, a number of the consecutively allocated interlace units and the number of the allocatable resources in a following preset encoding mode corresponding to the resource allocation pattern, the preset encoding mode comprising:

in a case of the resource allocation pattern in which a minimum granularity of resource allocation is a resource block, RB,

when $(L_{CRBs} - 1) \leq \lfloor N_{RB}^{UL} / 2 \rfloor$, then $RIV = N_{RB}^{UL}(L_{CRBs} - 1) + RB_{START}$,

when $\qquad (L_{CRBs} - 1) > \lfloor N_{RB}^{UL} / 2 \rfloor,$ $\qquad$ then

$$RIV = N_{RB}^{UL}(N_{RB}^{UL} - L_{CRBs} + 1) + (N_{RB}^{UL} - 1 - RB_{START}),$$

where $N_{RB}^{UL}$ denotes the number of the allocatable resources, $L_{CRBs}$ denotes the number of the consecutively allocated interlace units, $RB_{START}$ denotes the starting position of the interlace units, and *RIV* denotes the resource allocation indicator value; or,
in a case of the resource allocation pattern in which a minimum granularity of resource allocation is a resource element, RE,

when $(L_{Carrier} - 1) \leq \lfloor N_{carrier} / 2 \rfloor$, then $C\_RIV = N_{Carrier}(L_{Carrier} - 1) + C_{START}$,
when $(L_{Carrier} - 1) > \lfloor N_{Carrier} / 2 \rfloor$, then

$$C\_RIV = N_{Carrier}(N_{Carrier} - L_{Carrier} + 1) + (N_{Carrier} - 1 - C_{START}),$$

where $N_{Carrier}$ denotes the number of the allocatable resources, $L_{Carrier}$ denotes the number of the consecutively allocated interlace units, $C_{START}$ denotes the starting position of the interlace units, and *C_RIV* denotes the resource allocation indicator value;
wherein each of the interlace units includes discrete resource units which have equal intervals or unequal intervals; and indicating, by using the RIV, resource position information allocated to a UE.

2. A spectrum resource allocation method comprising:

determining (S102) a resource allocation pattern of user equipments, UEs, or UE groups according to preset parameters, wherein the preset parameters comprise: a starting position of a frequency domain or an ending position of the frequency domain, a length of consecutively allocated resources, and a number of allocatable resources in a system;
wherein the allocatable resources in the system and the consecutively allocated resources are divided into interlace units and consecutively allocated interlace units respectively;
obtaining (S104) a resource allocation indicator value, RIV, through a starting position index of the interlace units, the number of the consecutively allocated interlace units and the number of the allocatable resources in a following preset encoding mode corresponding to the resource allocation pattern, the preset encoding mode comprising: in a case of the resource allocation pattern in which a minimum granularity of resource allocation is a resource block, RB, or a resource element, RE,

$$Y = Mod\left(x_1 * c_1 + x_2 * c_2, M\right),$$

where $x_1$ denotes the starting position index of interlace units,
$x_2$ denotes the number of the consecutively allocated interlace units,

$M = m_1 * m_2$, $m_1$, $m_2$ are mutually prime that is configured by the system by a static or semi-static mode, that is to say, $m_1$, $m_2$ are mutually prime within the number of the available resources, $c_i = \dfrac{M}{m_i} * \left(\dfrac{M}{m_i}\right)'$,

$i$ = 1,2 and $\left(\dfrac{M}{m_i}\right)^{'}$ is a smallest positive integer of satisfying mod($c_i$, $m_i$) = 1,

Y denotes the resource allocation indicator value; and indicating, by using the RIV, resource position information allocated to a UE.

3. A spectrum resource allocation method comprising:

determining (S102) a resource allocation pattern of user equipments, UEs, or UE groups according to preset parameters, wherein the preset parameters comprise: a starting position of a frequency domain or an ending position of the frequency domain, a length of consecutively allocated resources, and a number of allocatable resources in a system;
wherein the allocatable resources in the system and the consecutively allocated resources are divided into interlace units and consecutively allocated interlace units respectively;
obtaining (S104) a resource allocation indicator value, RIV, by a starting position of the interlace units and an ending position of the interlace units in a following preset encoding mode corresponding to the resource allocation pattern, the preset encoding mode comprising:

$$r^{'} = \sum_{i=0}^{M^{'}-1} \left\langle \begin{matrix} N^{'} - s_i \\ M^{'} - i \end{matrix} \right\rangle,$$

where $s_i$ denotes the starting position of the interlace units,
$s_i$ -1 denotes the ending position of the interlace units,
$M'$ denotes the number of the starting and ending of the interlace units, $N^{'} = \left\lceil N_{\text{RB}}^{\text{UL}} / P \right\rceil + 1$, P denotes a size of a resource block group, RBG, and $P$ is configured according to a corresponding relationship with the system bandwidth or according to resource allocation requirements,
$r'$ denotes the resource allocation indicator value; and indicating, by using the RIV, resource position information allocated to a UE.

4. The method of claim 1, 2 or 3, wherein the number of the allocatable resources in the system is divided into a first number of interlace units.

5. The method of claim 4, wherein each of the interlace units comprises a second number of resource units; and wherein the resource units are resource blocks, RBs, or resource elements REs, or resource block groups, RBGs, or sub-bands.

6. The method of claim 5, wherein between the resource units in each of the interlace units are intervals of specific values; or between the resource units in each of the interlace units are consecutive resource blocks;
wherein the intervals between the resource units are equal intervals or unequal intervals; and
wherein each of the intervals is a value of a period when the intervals between the resource units are equal.

7. The method of claim 5 or 6, wherein between the interlace units, a specific offset exists between resource units which have the same resource unit index; and
wherein the minimum of the offset is zero, and the maximum of the offset is the first number or the second number or a preset number.

8. The method of claim 5, wherein the second number is obtained by dividing the number of the allocatable resources in the system by the period.

9. The method of claim 1, 2 or 3,
wherein the minimum granularity of resource allocation is related to the granularity of a clear channel assessment, CCA, detection pattern.

10. The method of claim 9, wherein
the minimum granularity of resource allocation is consistent with the minimum granularity of the CCA detection pattern; or
the minimum granularity of resource allocation is inconsistent with the minimum granularity of the CCA detection
pattern.

11. The method of claim 5 or 10, wherein the resource allocation indicator value is used for the terminal UE obtaining
the allocated resource position information through corresponding decoding according to the resource allocation
indicator value, and
the resource position information comprises:

> the starting position of the frequency domain, and the length of the consecutively allocated resources; or
> the starting position of the interlace units, and the number of consecutively allocated interlace units; or
> the starting position of the frequency domain, and the ending position of frequency domain resources; or
> the starting position of the interlace units, and the ending position of the interlace units.

12. The method of claim 7, wherein
at least one of the period, the first number, the second number, the intervals, the offset, and the preset number in
the resource allocation pattern is obtained by at least one of the following modes:

> obtaining through a corresponding relationship with a system bandwidth;
> obtaining through a downlink control information, DCI, indication;
> obtaining through preset values; and
> obtaining through values configured by a base station or high layer signaling.

13. The method of any one of claims 1-12, wherein
a base station transmits the resource allocation indicator value to the UE by low bit overheads for the UE obtaining
the resource allocation pattern in the entire available resources or obtaining the resource allocation pattern with
equal interval in the entire available resources by the preset parameters.

14. The method of claim 1, wherein a bitmap is used to indicate the resource allocation pattern in the entire available
resources or the resource position information allocated to the UE.

15. A spectrum resource allocation ; apparatus comprising:

> a determining module (22), configured to determine a resource allocation pattern of user equipments, UEs, or
> UE groups according to preset parameters, wherein the preset parameters comprise: a starting position of a
> frequency domain or an ending position of the frequency domain, a length of consecutively allocated resources,
> and a number of allocatable resources in a system;
> wherein the allocatable resources in the system and the consecutively allocated resources are divided into
> interlace units and consecutively allocated interlace units respectively; and
> an obtaining module (24), configured to obtain a resource allocation indicator value, RIV, through a starting
> position of the interlace units, a number of the interlace units and the number of the allocatable resources in
> one of the following preset encoding modes:

>> in a case of the resource allocation pattern in which a minimum granularity of resource allocation is a
>> resource block, RB,

$$\text{when } (L_{CRBs} - 1) \le \left\lfloor N_{\text{RB}}^{\text{UL}} / 2 \right\rfloor, \text{ then } RIV = N_{\text{RB}}^{\text{UL}}(L_{CRBs} - 1) + RB_{\text{START}}, \; RIV$$

$$\text{when } (L_{CRBs} - 1) > \left\lfloor N_{\text{RB}}^{\text{UL}} / 2 \right\rfloor, \qquad\qquad \text{then}$$

$$RIV = N_{\text{RB}}^{\text{UL}}(N_{\text{RB}}^{\text{UL}} - L_{CRBs} + 1) + (N_{\text{RB}}^{\text{UL}} - 1 - RB_{\text{START}}), \; RIV$$

>> where $N_{\text{RB}}^{\text{UL}}$ denotes the number of the allocatable resources, $L_{CRBs}$ denotes the number of the consecutively allocated interlace units, $RB_{\text{START}}$ denotes the starting position of the interlace units, and $RIV$ denotes
>> the resource allocation indicator value;
>> in a case of the resource allocation pattern in which a minimum granularity of resource allocation is a
>> resource element, RE,

when $(L_{Carrier}-1) \leq \lfloor N_{Carrier}/2 \rfloor$, then $C\_RIV = N_{Carrier}(L_{Carrier}-1)+C_{START}$,

when $(L_{Carrier}-1) > \lfloor N_{Carrier}/2 \rfloor$, then $C\_RIV = N_{Carrier}(L_{Carrier}-L_{Carrier}+1)+(L_{Carrier}-1-C_{START})$,

where $N_{Carrier}$ denotes the number of the allocatable resources, $L_{Carrier}$ denotes the number of the interlace units, $C_{START}$ denotes the starting position of the interlace units, and $C\_RIV$ denotes the resource allocation indicator value;

or,

an obtaining module (24), configured to obtain a resource allocation indicator value through a starting position index of interlace units, a number of the interlace units and the number of the allocatable resources in a following preset encoding mode:

in the case of the resource allocation pattern in which a minimum granularity of resource allocation is RB or RE,

$$Y = Mod\left(x_1 * c_1 + x_2 * c_2, M\right),$$

where $x_1$ denotes the starting position index of interlace units,

$x_2$ denotes the number of the interlace units,

$M = m_1 * m_2$, $m_1$, $m_2$ are mutually prime that is configured by the system by a static or semi-static mode, that is to say, $m_1$, $m_2$ are mutually prime within the number of the available resources,

$c_i = \dfrac{M}{m_i} * \left(\dfrac{M}{m_i}\right)'$ , $i = 1,2$ and $\left(\dfrac{M}{m_i}\right)'$ is a smallest positive integer of satisfying $mod(c_i, m_i) = 1$,

$Y$ denotes the resource allocation indicator value;

or,

an obtaining module (24), configured to obtain a resource allocation indicator value by a starting position of interlace units and an ending position of the interlace units in a following preset encoding mode:

$$r' = \sum_{i=0}^{M'-1} \left\langle \begin{matrix} N'-s_i \\ M'-i \end{matrix} \right\rangle,$$

where $s_i$ denotes the starting position of the interlace units,

$s_i-1$ denotes the ending position of the interlace units,

$M'$ denotes the number of the starting and ending of the interlace units,

$$N' = \left\lceil N_{RB}^{UL} / P \right\rceil + 1,$$

$P$ denotes a size of a resource block group, RBG, and $P$ is configured according to a corresponding relationship with the system bandwidth or according to resource allocation requirements,

$r'$ denotes the resource allocation indicator value;

wherein the resource allocation indicator value is used for indicating resource position information allocated to a UE.

## Patentansprüche

1. Spektrumsressourcenzuweisungsverfahren, umfassend:

Bestimmen (S102) eines Ressourcenzuweisungsmusters von Benutzergeräten, UEs, oder UE-Gruppen gemäß voreingestellten Parametern, wobei die voreingestellten Parameter umfassen: eine Anfangsposition einer Frequenzdomäne oder eine Endposition der Frequenzdomäne, eine Länge fortlaufend zugewiesener Ressourcen und eine Anzahl zuweisungsfähiger Ressourcen in einem System;

wobei die zuweisungsfähigen Ressourcen im System und die fortlaufend zugewiesenen Ressourcen in Verschränkungseinheiten bzw. fortlaufend zugewiesene Verschränkungseinheiten unterteilt sind;
Erhalten (S104) eines Ressourcenzuweisungsindikatorwertes, RIV, durch eine Anfangsposition der Verschränkungseinheiten, eine Anzahl der fortlaufend zugewiesenen Verschränkungseinheiten und die Anzahl der zuweisungsfähigen Ressourcen in einem folgenden voreingestellten Codiermodus, der dem Ressourcenzuweisungsmuster entspricht, wobei der voreingestellte Codiermodus umfasst:

in einem Fall des Ressourcenzuweisungsmusters, in dem eine Mindestgranularität der Ressourcenzuweisung einen Ressourcenblock, RB, darstellt,

wenn $(L_{CRBs} - 1) \leq \lfloor N_{RB}^{UL}/2 \rfloor$, dann $RIV = N_{RB}^{UL}(L_{CRBs} - 1) + RIV\ RB_{START}$,

wenn $(L_{CRBs} - 1) > \lfloor N_{RB}^{UL}/2 \rfloor$, dann $RIV = N_{RB}^{UL}(N_{RB}^{UL} - L_{CRBs} + \qquad RIV$

$1) + (N_{RB}^{UL} - 1 - RB_{START})$,

wobei $N_{RB}^{UL}$ die Anzahl der zuweisungsfähigen Ressourcen bezeichnet, $L_{CRBs}$ die Anzahl der fortlaufend zugewiesenen Verschränkungseinheiten bezeichnet, $RB_{START}$, die Anfangsposition der Verschränkungseinheiten bezeichnet und $RIV$ den Ressourcenzuweisungsindikatorwert bezeichnet;
oder,
in einem Fall des Ressourcenzuweisungsmusters, in dem eine Mindestgranularität der Ressourcenzuweisung ein Ressourcenelement, RE, darstellt,
wenn $(L_{Träger} - 1) \leq \lfloor N_{Träger}/2 \rfloor$,
dann $C\_RIV = N_{Träger}(L_{Träger} - 1) + C_{START}$,
wenn $(L_{Träger} - 1) > \lfloor N_{Träger}/2 \rfloor$,
dann $C\_RIV = N_{Träger}(N_{Träger} - L_{Träger} + 1) + (N_{Träger} - 1 - C_{START})$,
wobei $N_{Träger}$ die Anzahl der zuweisungsfähigen Ressourcen bezeichnet, $L_{Träger}$ die Anzahl der fortlaufend zugewiesenen Verschränkungseinheiten bezeichnet, $C_{START}$ die Anfangsposition der Verschränkungseinheiten bezeichnet und $C\_RIV$ den Ressourcenzuweisungsindikatorwert bezeichnet;
wobei jede der Verschränkungseinheiten diskrete Ressourceneinheiten umfasst, die gleiche Intervalle oder ungleiche Intervalle aufweisen;
und Angeben der einem UE zugewiesenen Ressourcenpositionsinformationen unter Verwendung des RIV.

2.  Spektrumsressourcenzuweisungsverfahren, umfassend:

Bestimmen (S102) eines Ressourcenzuweisungsmusters von Benutzergeräten, UEs, oder UE-Gruppen gemäß voreingestellten Parametern, wobei die voreingestellten Parameter umfassen: eine Anfangsposition einer Frequenzdomäne oder eine Endposition der Frequenzdomäne, eine Länge fortlaufend zugewiesener Ressourcen und eine Anzahl zuweisungsfähiger Ressourcen in einem System;
wobei die zuweisungsfähigen Ressourcen im System und die fortlaufend zugewiesenen Ressourcen in Verschränkungseinheiten bzw. fortlaufend zugewiesene Verschränkungseinheiten unterteilt sind;
Erhalten (S104) eines Ressourcenzuweisungsindikatorwertes, RIV, durch einen Anfangspositionsindex der Verschränkungseinheiten, die Anzahl der nacheinander zugewiesenen Verschränkungseinheiten und die Anzahl der zuweisungsfähigen Ressourcen in einem folgenden voreingestellten Codiermodus, der dem Ressourcenzuweisungsmuster entspricht, wobei der voreingestellte Codiermodus umfasst:
in einem Fall des Ressourcenzuweisungsmusters, in dem eine Mindestgranularität der Ressourcenzuweisung einen Ressourcenblock, RB, oder ein Ressourcenelement, RE, darstellt,

$$Y = Mod(x_1 * c_1 + x_2 * c_2, M),$$

wobei $x_1$ den Anfangspositionsindex der Verschränkungseinheiten bezeichnet,
$x_2$ die Anzahl der fortlaufend zugewiesenen Verschränkungseinheiten bezeichnet,
$M = m_1, * m_2, m_1, m_2$ gegenseitig teilerfremd sind, was vom System durch einen statischen oder halbstatischen Modus konfiguriert ist, das heißt, $m_1, m_2$ innerhalb der Anzahl der verfügbaren Ressourcen gegenseitig teilerfremd sind,

$$c_i = \frac{M}{m_i} * \left(\frac{M}{m_i}\right),\; i = 1,2 \text{ und } \left(\frac{M}{m_i}\right) \text{ eine kleinste positive Ganzzahl eines genügenden } \mathrm{mod}(c_i, m_i) = 1 \text{ ist,}$$

*Y* den Ressourcenzuweisungsindikatorwert bezeichnet;
und Angeben der einem UE zugewiesenen Ressourcenpositionsinformationen unter Verwendung des RIV.

3. Spektrumsressourcenzuweisungsverfahren, umfassend:

Bestimmen (S102) eines Ressourcenzuweisungsmusters von Benutzergeräten, UEs, oder UE-Gruppen gemäß voreingestellten Parametern, wobei die voreingestellten Parameter umfassen: eine Anfangsposition einer Frequenzdomäne oder eine Endposition der Frequenzdomäne, eine Länge fortlaufend zugewiesener Ressourcen und eine Anzahl zuweisungsfähiger Ressourcen in einem System;
wobei die zuweisungsfähigen Ressourcen im System und die fortlaufend zugewiesenen Ressourcen in Verschränkungseinheiten bzw. nacheinander zugewiesene Verschränkungseinheiten unterteilt sind;
Erhalten (S104) eines Ressourcenzuweisungsindikatorwertes, RIV, durch eine Anfangsposition der Verschränkungseinheiten und eine Endposition der Verschränkungseinheiten in einem folgenden voreingestellten Codiermodus, der dem Ressourcenzuweisungsmuster entspricht, wobei der voreingestellte Codiermodus umfasst:

$$r' = \sum_{i=0}^{M'-1} \left\langle \begin{matrix} N' - s_i \\ M' - i \end{matrix} \right\rangle,$$

wobei $s_i$ die Anfangsposition der Verschränkungseinheiten bezeichnet,
$s_i$ - 1 die Endposition der Verschränkungseinheiten bezeichnet,
*M'* die Anzahl der Anfänge und Enden der Verschränkungseinheiten bezeichnet,
$N' = \lceil N_{RB}^{UL} / P \rceil + 1,$ *P* eine Größe einer Ressourcenblockgruppe, RBG, bezeichnet und *P* gemäß einer entsprechenden Beziehung zur Systembandbreite oder gemäß Ressourcenzuweisungsanforderungen konfiguriert ist,
*r'* den Ressourcenzuweisungsindikatorwert bezeichnet;

und Angeben der einem UE zugewiesenen Ressourcenpositionsinformationen unter Verwendung des RIV.

4. Verfahren nach Anspruch 1, 2, oder 3, wobei die Anzahl der zuweisungsfähigen Ressourcen im System in eine erste Anzahl von Verschränkungseinheiten unterteilt ist.

5. Verfahren nach Anspruch 4, wobei jede der Verschränkungseinheiten eine zweite Anzahl von Ressourceneinheiten umfasst; und wobei die Ressourceneinheiten Ressourcenblöcke, RBs, oder Ressourcenelemente, REs, oder Ressourcenblockgruppen, RBGs, oder Teilbänder darstellen.

6. Verfahren nach Anspruch 5, wobei zwischen den Ressourceneinheiten in jeder der Verschränkungseinheiten Intervalle bestimmter Werte vorliegen oder zwischen den Ressourceneinheiten in jeder der Verschränkungseinheiten fortlaufende Ressourcenblöcke vorliegen;
wobei die Intervalle zwischen den Ressourceneinheiten gleiche Intervalle oder ungleiche Intervalle darstellen; und wobei jedes der Intervalle einen Wert einer Periode darstellt, wenn die Intervalle zwischen den Ressourceneinheiten gleich sind.

7. Verfahren nach Anspruch 5 oder 6, wobei zwischen den Verschränkungseinheiten ein bestimmter Versatz zwischen Ressourceneinheiten vorliegt, die denselben Ressourceneinheitenindex aufweisen; und
wobei das Minimum des Versatzes null beträgt und das Maximum des Versatzes die erste Zahl oder die zweite Zahl oder eine voreingestellte Zahl beträgt.

8. Verfahren nach Anspruch 5, wobei die zweite Zahl erhalten wird, indem die Anzahl der zuweisungsfähigen Ressource im System durch die Periode dividiert wird.

9. Verfahren nach Anspruch 1, 2 oder 3, wobei die Mindestgranularität der Ressourcenzuweisung mit der Granularität eines Erkennungsmusters für die Freikanalbestimmung, Clear Channel Assessment CCA, in Beziehung steht.

**10.** Verfahren nach Anspruch 9, wobei
die Mindestgranularität der Ressourcenzuweisung mit der Mindestgranularität des CCA-Erkennungsmusters übereinstimmt; oder
die Mindestgranularität der Ressourcenzuweisung mit der Mindestgranularität des CCA-Erkennungsmusters nicht übereinstimmt.

**11.** Verfahren nach Anspruch 5 oder 10, wobei der Ressourcenzuweisungsindikatorwert dazu dient, dass das UE-Endgerät die zugewiesenen Ressourcenpositionsinformationen durch entsprechendes Decodieren gemäß dem Ressourcenzuweisungsindikatorwert erhält, und
die Ressourcenpositionsinformationen enthalten:

die Anfangsposition der Frequenzdomäne und die Länge der fortlaufend zugewiesenen Ressourcen; oder
die Anfangsposition der Verschränkungseinheiten und die Anzahl der fortlaufend zugewiesenen Ressourcen; oder
die Anfangsposition der Frequenzdomäne und die Endposition der Frequenzdomänenressourcen; oder
die Anfangsposition der Verschränkungseinheiten und die Endposition der Verschränkungseinheiten.

**12.** Verfahren nach Anspruch 7, wobei
mindestens eines von der Periode, der ersten Zahl, der zweiten Zahl, den Intervallen, dem Versatz und der voreingestellten Zahl im Ressourcenzuweisungsmuster durch mindestens einen der folgenden Modi erhalten wird:

Erhalten durch eine entsprechende Beziehung zu einer Systembandbreite;
Erhalten durch eine Angabe von Abwärtsstreckensteuerungsinformationen, Downlink Control Information DCI;
Erhalten durch voreingestellte Werte; und
Erhalten durch Werte, die durch eine Basisstation oder Signalgebung auf hoher Ebene konfiguriert sind.

**13.** Verfahren nach einem der Ansprüche 1 bis 12, wobei
eine Basisstation den Ressourcenindikatorwert mit geringen Bit-Overheads an das UE sendet, damit das UE das Ressourcenzuweisungsmuster in den gesamten verfügbaren Ressourcen erhält oder durch die voreingestellten Parameter das Ressourcenzuweisungsmuster mit gleichem Intervall in den gesamten verfügbaren Ressourcen erhält.

**14.** Verfahren nach Anspruch 1, wobei eine Bitmap dazu dient, das Ressourcenzuweisungsmuster in den gesamten verfügbaren Ressourcen oder die dem UE zugewiesenen Ressourcenpositionsinformationen anzugeben.

**15.** Spektrumsressourcenzuweisungsvorrichtung, umfassend:

ein Bestimmungsmodul (22), das dazu konfiguriert ist, ein Ressourcenzuweisungsmuster von Benutzergeräten, UEs, oder UE-Gruppen gemäß voreingestellten Parametern zu bestimmen, wobei die voreingestellten Parameter umfassen: eine Anfangsposition einer Frequenzdomäne oder eine Endposition der Frequenzdomäne, eine Länge fortlaufend zugewiesener Ressourcen und eine Anzahl zuweisungsfähiger Ressourcen in einem System;
wobei die zuweisungsfähigen Ressourcen im System und die fortlaufend zugewiesenen Ressourcen in Verschränkungseinheiten bzw. fortlaufend zugewiesene Verschränkungseinheiten unterteilt sind; und
ein Erhaltensmodul (24), das dazu konfiguriert ist, einen Ressourcenzuweisungsindikatorwert, RIV, durch eine Anfangsposition der Verschränkungseinheiten, eine Anzahl der Verschränkungseinheiten und die Anzahl der zuweisungsfähigen Ressourcen in einem folgenden voreingestellten Codiermodi zu erhalten:

in einem Fall des Ressourcenzuweisungsmusters, in dem eine Mindestgranularität der Ressourcenzuweisung einen Ressourcenblock, RB, darstellt,

wenn $(L_{CRBs} - 1) \leq \lfloor N_{RB}^{UL}/2 \rfloor$, ($L_{CRBs}$ dann $RIV = N_{RB}^{UL}(L_{CRBs} - 1) + {}^{RIV} RB_{START}$,

wenn $(L_{CRBs} - 1) > \lfloor N_{RB}^{UL}/2 \rfloor$, ($L_{CRBs}$ dann $RIV = N_{RB}^{UL}(N_{RB}^{UL} - L_{CRBs} + {}^{RIV}$

$1) + (N_{RB}^{UL} - 1 - RB_{START})$,

wobei $N_{RB}^{UL}$ die Anzahl der zuweisungsfähigen Ressourcen bezeichnet, $L_{CRBs}$ die Anzahl der fortlaufend zugewiesenen Verschränkungseinheiten bezeichnet, $RB_{START}$, die Anfangsposition der Verschränkungseinheiten bezeichnet und $RIV$ den Ressourcenzuweisungsindikatorwert bezeichnet;

in einem Fall des Ressourcenzuweisungsmusters, in dem eine Mindestgranularität ein Ressourcenelement, RE, darstellt,

wenn $(L_{Träger}-1) \leq \lfloor N_{Träger}/2 \rfloor$,

dann $C\_RIV = N_{Träger}(L_{Träger}-1)+C_{START}$,

wenn $(L_{Träger}-1) > \lfloor N_{Träger}/2 \rfloor$,

dann $C\_RIV = N_{Träger}(N_{Träger}-L_{Träger}+1)+(N_{Träger}-1-C_{START})$,

wobei $N_{Träger}$ die Anzahl der zuweisungsfähigen Ressourcen bezeichnet, $L_{Träger}$ die Anzahl der Verschränkungseinheiten bezeichnet, $C_{START}$ die Anfangsposition der Verschränkungseinheiten bezeichnet und $C\_RIV$ den Ressourcenzuweisungsindikatorwert bezeichnet;

oder,

ein Erhaltensmodul (24), das dazu konfiguriert ist, einen Ressourcenindikatorwert durch einen Anfangspositionsindex der Verschränkungseinheiten, eine Anzahl der Verschränkungseinheiten und die Anzahl der zuweisungsfähigen Ressourcen in einem folgenden voreingestellten Codiermodus zu erhalten:

im Fall des Ressourcenzuweisungsmusters, in dem eine Mindestgranularität der Ressourcenzuweisung einen RB oder ein RE darstellt,

$$Y = Mod(x_{1,}* c_1 + x_2 * c_2, M),$$

wobei $x_1$ den Anfangspositionsindex der Verschränkungseinheiten bezeichnet,

$x_2$ die Anzahl der Verschränkungseinheiten bezeichnet,

$M = m_1 * m_2$, $m_1$, $m_2$ gegenseitig teilerfremd sind, was vom System durch einen statischen oder halbstatischen Modus konfiguriert ist, das heißt, $m_1$, $m_2$ innerhalb der Anzahl der verfügbaren Ressourcen gegenseitig teilerfremd sind,

$c_i = \frac{M}{m_i} * \left(\frac{M}{m_i}\right)$, $i = 1, 2$ und $\left(\frac{M}{m_i}\right)$ eine kleinste positive Ganzzahl eines genügenden $mod(c_i, m_i)$ =$\mathbf{1}$ ist,

$Y$ den Ressourcenzuweisungsindikatorwert bezeichnet;

oder,

ein Erhaltensmodul (24), das dazu konfiguriert ist, einen Ressourcenindikatorwert durch eine Anfangsposition von Verschränkungseinheiten und eine Endposition der Verschränkungseinheiten in einem folgenden voreingestellten Codiermodus zu erhalten:

$$r' = \sum_{i=0}^{M'-1} \langle \begin{matrix} N' & -s_i \\ M' & -i \end{matrix} \rangle,$$

wobei $s_i$ die Anfangsposition der Verschränkungseinheiten bezeichnet,

$s_i$ - $\mathbf{1}$ die Endposition der Verschränkungseinheiten bezeichnet,

$M'$ die Anzahl der Anfänge und Enden der Verschränkungseinheiten bezeichnet,

$$N' = \lceil N_{RB}^{UL} / P \rceil + 1,$$

$P$ eine Größe einer Ressourcenblockgruppe, RBG, bezeichnet und $P$ gemäß einer entsprechenden Beziehung zur Systembandbreite oder gemäß Ressourcenzuweisungsanforderungen konfiguriert ist,

$r'$ den Ressourcenzuweisungsindikatorwert bezeichnet;

wobei der Ressourcenzuweisungsindikatorwert dazu dient, einem UE zugewiesene Ressourcenpositionsinformationen anzugeben.

**Revendications**

1. Procédé d'attribution de ressources spectrales, comprenant :

la détermination (S102) d'un modèle d'attribution de ressources d'équipements d'utilisateurs, UE (*user equipment*), ou de groupes d'équipements UE selon des paramètres prédéfinis, dans lequel les paramètres prédéfinis comprennent : une position de début d'un domaine fréquentiel ou une position de fin du domaine fréquentiel, une longueur de ressources attribuées de manière consécutive et un nombre de ressources pouvant être attribuées dans un système ;
dans lequel les ressources pouvant être attribuées dans le système et les ressources attribuées de manière consécutive sont divisées en unités d'entrelacement et en unités d'entrelacement attribuées de manière consécutive, respectivement ;
l'obtention (S104) d'une valeur d'indicateur d'attribution de ressource, RIV, par le biais d'une position de début des unités d'entrelacement, d'un nombre des unités d'entrelacement attribuées de manière consécutive et du nombre des ressources pouvant être attribuées dans un mode de codage prédéfini suivant, correspondant au modèle d'attribution de ressources, le mode de codage prédéfini comprenant :

dans le cas du modèle d'attribution de ressources dans lequel une granularité minimale d'attribution de ressources est un bloc de ressources, RB (*resource block*),

lorsque $(L_{CRBs} - 1) \leq \lfloor N_{RB}^{UL}/2 \rfloor$, 1) alors

$$RIV = N_{RB}^{UL}(L_{CRBs} - 1) + RB_{DÉBUT},$$

lorsque $(L_{CRBs} - 1) > \lfloor N_{RB}^{UL}/2 \rfloor$, ($L_{CRBs}$ alors

$$RIV = N_{RB}^{UL}(N_{RB}^{UL} - L_{CRBs} + 1) + (N_{RB}^{UL} - 1 - RB_{DÉBUT}),$$

où $N_{RB}^{UL}$ désigne le nombre des ressources pouvant être attribuées, $L_{CRBs}$ désigne le nombre des unités d'entrelacement attribuées de manière consécutive, $RB_{DÉBUT}$ désigne la position de début des unités d'entrelacement et $RIV$ désigne la valeur d'indicateur d'attribution de ressource ;
ou,
dans le cas du modèle d'attribution de ressources dans lequel une granularité minimale d'attribution de ressources est un élément de ressource, RE (*resource element*),
lorsque ($L_{porteuse}$ - 1) $\leq \lfloor N_{porteuse}/2 \rfloor$, alors

$$C\_RIV = N_{Porteuse}(L_{Porteuse} - 1) + C_{DÉBUT},$$

lorsque ($L_{porteuse}$ - 1) $> \lfloor N_{porteuse}/2 \rfloor$, alors

$$C\_RIV = N_{Porteuse}(N_{Porteuse} - L_{Porteuse} + 1) + (N_{Porteuse} - 1 - C_{DÉBUT}),$$

où $N_{Porteuse}$ désigne le nombre des ressources pouvant être attribuées, $L_{Porteuse}$ désigne le nombre des unités d'entrelacement attribuées de manière consécutive, $C_{DÉBUT}$ désigne la position de début des unités d'entrelacement et $C\_RIV$ désigne la valeur d'indicateur d'attribution de ressource ;
dans lequel chacune des unités d'entrelacement inclut des unités de ressources discrètes qui ont des intervalles égaux ou des intervalles inégaux ;
et l'indication, à l'aide de la valeur RIV, des informations de position de ressource attribuées à un équipement UE.

2. Procédé d'attribution de ressources spectrales, comprenant :

la détermination (S102) d'un modèle d'attribution de ressources d'équipements d'utilisateurs, UE, ou de groupes d'équipements UE selon des paramètres prédéfinis, dans lequel les paramètres prédéfinis comprennent : une position de début d'un domaine fréquentiel ou une position de fin du domaine fréquentiel, une longueur de ressources attribuées de manière consécutive et un nombre de ressources pouvant être attribuées dans un système ;

dans lequel les ressources pouvant être attribuées dans le système et les ressources attribuées de manière consécutive sont divisées en unités d'entrelacement et en unités d'entrelacement attribuées de manière consécutive, respectivement ;

l'obtention (S104) d'une valeur d'indicateur d'attribution de ressource, RIV, par le biais d'un indice de position de début des unités d'entrelacement, du nombre des unités d'entrelacement attribuées de manière consécutive et du nombre des ressources pouvant être attribuées dans un mode de codage prédéfini suivant, correspondant au modèle d'attribution de ressources, le mode de codage prédéfini comprenant :

dans le cas du modèle d'attribution de ressources dans lequel une granularité minimale d'attribution de ressources est un bloc de ressources, RB, ou un élément de ressource, RE,

$$Y = Mod(x_1 * c_1 + x_2 * c_2, M),$$

où $x_1$ désigne l'indice de position de début d'unités d'entrelacement,

$x_2$ désigne le nombre des unités d'entrelacement attribuées de manière consécutive,

$M = m_1 * m_2$, $m_1$, $m_2$ sont premiers entre eux, ce qui est configuré par le système selon un mode statique ou semi-statique, c'est-à-dire que $m_1$, $m_2$ sont premiers entre eux au sein du nombre des ressources disponibles,

$c_i = \dfrac{M}{m_i} * \left(\dfrac{M}{m_i}\right)'$, $i = 1,2$ et $\left(\dfrac{M}{m_i}\right)'$ est le plus petit entier positif satisfaisant

$$mod(c_i, m_i) = 1,$$

$Y$ désigne la valeur d'indicateur d'attribution de ressource ;

et l'indication, à l'aide de la valeur RIV, des informations de position de ressource attribuée à un équipement UE.

3. Procédé d'attribution de ressources spectrales, comprenant :

la détermination (S102) d'un modèle d'attribution de ressources d'équipements d'utilisateurs, UE, ou de groupes d'équipements UE selon des paramètres prédéfinis, dans lequel les paramètres prédéfinis comprennent : une position de début d'un domaine fréquentiel ou une position de fin du domaine fréquentiel, une longueur de ressources attribuées de manière consécutive et un nombre de ressources pouvant être attribuées dans un système ;

dans lequel les ressources pouvant être attribuées dans le système et les ressources attribuées de manière consécutive sont divisées en unités d'entrelacement et en unités d'entrelacement attribuées de manière consécutive, respectivement ;

l'obtention (S104) d'une valeur d'indicateur d'attribution de ressource, RIV, au moyen d'une position de début des unités d'entrelacement et d'une position de fin des unités d'entrelacement dans un mode de codage prédéfini suivant, correspondant au modèle d'attribution de ressources, le mode de codage prédéfini comprenant :

$$r' = \sum_{i=0}^{M'-1} \left\langle \begin{matrix} N' - s_i \\ M' - i \end{matrix} \right\rangle,$$

où $s_i$ désigne la position de début des unités d'entrelacement,

$s_i$ - 1 désigne la position de fin des unités d'entrelacement,

$M'$ désigne le nombre de début et de fin des unités d'entrelacement,

$$N' = \lceil N_{RB}^{UL}/P \rceil + 1,$$

$P$ désigne une taille de groupe de blocs de ressources, RBG (*resource block group*) et *P est* configurée selon une relation correspondante avec la largeur de bande de système ou selon des exigences d'attribution de ressources,

*r'* désigne la valeur d'indicateur d'attribution de ressource ;

et l'indication, à l'aide de la valeur RIV, des informations de position de ressource attribuée à un équipement UE.

4. Procédé selon la revendication 1, 2 ou 3, dans lequel le nombre des ressources pouvant être attribuées dans le système est divisé en un premier nombre d'unités d'entrelacement.

5. Procédé selon la revendication 4, dans lequel chacune des unités d'entrelacement comprend un second nombre d'unités de ressources ; et dans lequel les unités de ressources sont des blocs de ressources, RB, ou des éléments de ressources, RE, ou des groupes de blocs de ressources, RBG, ou des sous-bandes.

6. Procédé selon la revendication 5, dans lequel il existe entre les unités de ressources de chacune des unités d'entrelacement, des intervalles de valeurs spécifiques ; ou il existe entre les unités de ressources de chacune des unités d'entrelacement, des blocs de ressources consécutifs ;
dans lequel les intervalles entre les unités de ressources sont des intervalles égaux ou des intervalles inégaux ; et dans lequel chacun des intervalles est une valeur de période lorsque les intervalles entre les unités de ressources sont égaux.

7. Procédé selon la revendication 5 ou 6, dans lequel entre les unités d'entrelacement, il existe un décalage spécifique entre des unités de ressources qui ont le même indice d'unité de ressource ; et
dans lequel le minimum de décalage est égal à zéro et le maximum de décalage est le premier nombre ou le second nombre ou un nombre prédéfini.

8. Procédé selon la revendication 5, dans lequel le second nombre est obtenu par division du nombre de ressources pouvant être attribuées dans le système par la période.

9. Procédé selon la revendication 1, 2 ou 3, dans lequel la granularité minimale d'attribution de ressources est liée à la granularité d'un modèle de détection d'estimation de disponibilité de canal, CCA (*clear channel assessment*).

10. Procédé selon la revendication 9, dans lequel :

la granularité minimale d'attribution de ressources est cohérente avec la granularité minimale du modèle de détection d'estimation CCA ; ou
la granularité minimale d'attribution de ressources n'est pas cohérente avec la granularité minimale du modèle de détection d'estimation CCA.

11. Procédé selon la revendication 5 ou 10, dans lequel la valeur d'indicateur d'attribution de ressource est utilisée pour l'obtention par le terminal UE des informations de position de ressource attribuée, par le biais d'un décodage correspondant en fonction de la valeur d'indicateur d'attribution de ressource, et
les informations de position de ressource comprennent :

la position de début du domaine fréquentiel et la longueur des ressources attribuées de manière consécutive ; ou
la position de début des unités d'entrelacement et le nombre d'unités d'entrelacement attribuées de manière consécutive ; ou
la position de début du domaine fréquentiel et la position de fin de ressources de domaine fréquentiel ; ou
la position de début des unités d'entrelacement et la position de fin des unités d'entrelacement.

12. Procédé selon la revendication 7, dans lequel :
au moins l'un parmi : la période, le premier nombre, le second nombre, les intervalles, le décalage, et le nombre prédéfini dans le modèle d'attribution de ressources est/sont obtenu(e)(s) au moyen de l'un des modes suivants :

obtention par le biais d'une relation correspondante avec une largeur de bande de système ;
obtention par le biais d'une indication d'informations de commande de liaison descendante, DCI (*downlink control information*) ;
obtention par le biais de valeurs prédéfinies ; et
obtention par le biais de valeurs configurées par une station de base ou une signalisation de couche supérieure.

13. Procédé selon l'une quelconque des revendications 1 à 12, dans lequel :
une station de base transmet la valeur d'indicateur d'attribution de ressource à l'équipement UE au moyen de faibles surdébits binaires pour l'obtention, par l'équipement UE, du modèle d'attribution de ressources dans l'ensemble des ressources disponibles ou pour l'obtention, par l'équipement UE, du modèle d'attribution de ressources à intervalle égal dans l'ensemble des ressources disponibles, au moyen des paramètres prédéfinis.

14. Procédé selon la revendication 1, dans lequel une table de bits est utilisée pour indiquer le modèle d'attribution de ressources dans l'ensemble des ressources disponibles ou les informations de position de ressource attribuées à l'équipement UE.

15. Appareil d'attribution de ressources spectrales, comprenant :

un module de détermination (22) configuré pour déterminer un modèle d'attribution de ressources d'équipements d'utilisateurs, UE, ou de groupes d'équipements UE selon des paramètres prédéfinis, dans lequel les paramètres prédéfinis comprennent : une position de début d'un domaine fréquentiel ou une position de fin du domaine fréquentiel, une longueur de ressources attribuées de manière consécutive et un nombre de ressources pouvant être attribuées dans un système ;
dans lequel les ressources pouvant être attribuées dans le système et les ressources attribuées de manière consécutive sont divisées en unités d'entrelacement et en unités d'entrelacement attribuées de manière consécutive, respectivement ; et
un module d'obtention (24) configuré pour obtenir une valeur d'indicateur d'attribution de ressource, RIV, par le biais d'une position de début des unités d'entrelacement, d'un nombre des unités d'entrelacement et du nombre des ressources pouvant être attribuées dans l'un des modes de codage prédéfinis suivants :

dans le cas du modèle d'attribution de ressources dans lequel une granularité minimale d'attribution de ressources est un bloc de ressources, RB,
lorsque $(L_{CRBs} - 1) \leq \lfloor N_{RB}^{UL} / 2 \rfloor$, alors

$$RIV = N_{RB}^{UL}(L_{CRBs} - 1) + RB_{DÉBUT},$$

lorsque $(L_{CRBs} - 1) > \lfloor N_{RB}^{UL} / 2 \rfloor$, alors

$$RIV = N_{RB}^{UL}(N_{RB}^{UL} - L_{CRBs} + 1) + (N_{RB}^{UL} - 1 - RB_{DÉBUT}),$$

où $N_{RB}^{UL}$ désigne le nombre des ressources pouvant être attribuées, $L_{CRBs}$ désigne le nombre des unités d'entrelacement attribuées de manière consécutive, $RB_{DÉBUT}$ désigne la position de début des unités d'entrelacement, et *RIV* désigne la valeur d'indicateur d'attribution de ressource ;
dans le cas du modèle d'attribution de ressources dans lequel une granularité minimale d'attribution de ressources est un élément de ressource, RE,
lorsque $(L_{porteuse} - 1) \leq \lfloor N_{porteuse} / 2 \rfloor$, alors

$$C_{-RIV} = N_{Porteuse}(L_{Porteuse} - 1) + C_{DÉBUT},$$

lorsque $(L_{Porteuse} - 1) > \lfloor N_{Porteuse} / 2 \rfloor$, alors

$$C_{\_RIV} = N_{Porteuse}(N_{Porteuse} - L_{Porteuse} + 1) + (N_{Porteuse} - 1 - C_{DÉBUT}),$$

où $N_{Porteuse}$ désigne le nombre des ressources pouvant être attribuées, $L_{Porteuse}$ désigne le nombre des unités d'entrelacement, et $C_{DÉBUT}$ désigne la position de début des unités d'entrelacement, et $C\_RIV$ désigne la valeur d'indicateur d'attribution de ressource ;
ou,
un module d'obtention (24) configuré pour obtenir une valeur d'indicateur d'attribution de ressource par le biais d'un indice de position de début d'unités d'entrelacement, d'un nombre des unités d'entrelacement et du nombre des ressources pouvant être attribuées dans mode de codage prédéfini suivant :

dans le cas du modèle d'attribution de ressources dans lequel une granularité minimale d'attribution de ressources est RB ou RE,

$$Y = Mod(x_1 * c_1 + x_2 * c_2, M),$$

où $x_1$ désigne l'indice de position de début d'unités d'entrelacement,
$x_2$ désigne le nombre des unités d'entrelacement,
$M = m_1*m_2$, $m_1$, $m_2$ sont premiers entre eux, ce qui est configuré par le système selon un mode statique ou semi-statique, c'est-à-dire que $m_1$, $m_2$ sont premiers entre eux au sein du nombre des ressources disponibles, $c_i = \frac{M}{m_i} * \left(\frac{M}{m_i}\right)'$, $i$ = 1,2 et $\left(\frac{M}{m_i}\right)'$ est le plus petit entier positif satisfaisant

$$mod(c_i, m_i) = 1,$$

$Y$ désigne la valeur d'indicateur d'attribution de ressource ; ou,
un module d'obtention (24) configuré pour obtenir une valeur d'indicateur d'attribution de ressource au moyen d'une position de début d'unités d'entrelacement et d'une position de fin des unités d'entrelacement dans un mode de codage prédéfini suivant :

$$r' = \sum_{i=0}^{M'-1} \left| \begin{matrix} N' - s_i \\ M' - i \end{matrix} \right|,$$

où $s_i$ désigne la position de début des unités d'entrelacement,
$s_i$ - **1** désigne la position de fin des unités d'entrelacement,
$M'$ désigne le nombre de début et de fin des unités d'entrelacement,

$$N' = \lceil N_{RB}^{UL} / P \rceil + 1,$$

P désigne une taille de groupe de blocs de ressources, RBG, et $P$ est configurée selon une relation correspondante avec la largeur de bande de système ou selon des exigences d'attribution de ressources,
r' désigne la valeur d'indicateur d'attribution de ressource ;
dans lequel la valeur d'indicateur d'attribution de ressource est utilisée pour indiquer des informations de position de ressource attribuées à un équipement UE.

Determine a resource allocation pattern of nodes according to a preset parameter, wherein the preset parameter comprises at least one of: a starting position of a frequency domain or an offset of the frequency domain, an ending position of the frequency domain, a length of consecutively allocated resources or a size of consecutively allocated clusters, a number of clusters or a number of resource sets, a period T, a number of multiplexing nodes in frequency domain resources, and a number of allocatable resources in a system

S102

Obtain a corresponding resource allocation indicator value r by the resource allocation pattern determined by at least one of the preset parameters in a preset encoding mode, wherein the resource allocation indicator value r is used for indicating resource position information allocated to a terminal UE

S104

## FIG. 1

Determining module 22

Obtaining module 24

## FIG. 2

## FIG. 3

**System bandwidth 5M/25RB**

## FIG. 4

**System bandwidth 5M/25RB**

## FIG. 5

**System bandwidth 5M/25RB**

## FIG. 6

**System bandwidth 10M/50RB**

## FIG. 7

System bandwidth 20M/100PRB

FIG. 8

System bandwidth 20M/100RB

FIG. 9

System bandwidth 5M/25RB

FIG. 10

System bandwidth 5M/25RB

FIG. 11

System bandwidth 5M/25RB

FIG. 12

**EP 3 319 387 B1**

**REFERENCES CITED IN THE DESCRIPTION**

**Patent documents cited in the description**

- US 2013121278 A1
- US 2012307771 A1